(19) Europäisches Patentamt
European Patent Office
Office européen des brevets

(11) **EP 4 539 365 A1**

(12) **EUROPÄISCHE PATENTANMELDUNG**

(43) Veröffentlichungstag:
**16.04.2025   Patentblatt 2025/16**

(51) Internationale Patentklassifikation (IPC):
*H04L 1/00* (2006.01)       *H04L 25/06* (2006.01)

(21) Anmeldenummer: 23203531.1

(22) Anmeldetag: **13.10.2023**

(52) Gemeinsame Patentklassifikation (CPC):
**H04L 1/0045; H04L 25/4917**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Fraunhofer-Gesellschaft zur Förderung der angewandten Forschung e.V. 80686 München (DE)**

(72) Erfinder:
• **MILOSIU, Heinrich**
**91058 Erlangen (DE)**
• **EPPEL, Markus**
**90429 Nürnberg (DE)**
• **OEHLER, Frank**
**91058 Erlangen (DE)**

(74) Vertreter: **König, Andreas Rudolf et al Schoppe, Zimmermann, Stöckeler Zinkler, Schenk & Partner mbB Patentanwälte Radlkoferstraße 2 81373 München (DE)**

(54) **ANPASSEN DES SCHWELLENWERTES FÜR EINE DETEKTION DURCH KORRELATION BEI EINEM FUNK-TRANSCEIVER UND EINEM VERFAHREN ZUM BETREIBEN EINES FUNK-TRANSCEIVERS**

(57)    Ein Funk-Transceiver weist eine Funkschnittstelle zum Empfangen eines Funksignals und zum Bereitstellen von Abtastwerten basierend auf dem Funksignal auf. Der Funk-Transceiver umfasst einen Korrelator, der zum Ausführen einer Korrelation der Abtastwerte mit einem Korrelationsfolgenteil einer vorbestimmten Korrelationsfolge ausgebildet ist, um ein Korrelationsergebnis zu erhalten. Der Funk-Transceiver ist ausgebildet, um basierend auf einem Schwellwertvergleich des Korrelationsergebnisses mit einem Schwellwert ein Ergebnis zu liefern, ob die Abtastwerte der Korrelationsfolge ähneln. Der Funk-Transceiver umfasst einen Schwellwertanpasser zum Anpassen des Schwellwerts, wobei der Schwellwertanpasser ausgebildet ist, um eine Mehrzahl von Abtastwerten zu erhalten. Der Schwellwertanpasser ist ausgebildet, um die Abtastwerte auf ein Korrelationsfolgenmerkmal der Korrelationsfolge zu überprüfen, um ein Vorabergebnis zu erhalten, und um den Schwellwert abhängig davon anzupassen, ob die Abtastwerte das Korrelationsfolgenmerkmal aufweisen.

Fig. 11

**Beschreibung**

Die vorliegende Erfindung bezieht sich auf einen Funk-Transceiver und auf ein Verfahren zum Betreiben eines Funk-Transceivers. Die vorliegende Erfindung bezieht sich ferner auf stromsparende Funkempfänger mit Mustererkenner und latenzfreier Anpassung der Korrelatorschwelle.

Funkempfänger und Funk-Transceiver empfangen ausgesendete Nutzsignale, die für den Empfang bestimmt sind, und etliche Funksignale, die von Dritten ausgesendet werden aufgrund der Nutzung desselben Funkkanals. Für die gewünschte Nutzsignalübertragung sind diese Aussendungen Dritter als Störsignale zu klassifizieren. Gerade im mobilen Einsatz, d. h., wenn Funkempfänger oder Funksender nicht ortsfest sind oder auch die Funksender Dritter nicht ortsfest sind sowie Objekte oder Personen, die Funkabschattung oder Reflexion von Funksignalen vollführen, muss sowohl für die Nutzsignale als auch für die Störsignale von einer signifikanten Dynamik der Empfangspegel ausgegangen werden.

Damit ist ein höherer Aufwand verbunden, die Rekonstruktion und Decodierung der Nutzsignale am Eingang des Funkempfängers erfolgreich, d. h., möglichst fehlerfrei, durchzuführen. Viele technische Ansätze zur Vermeidung oder Kompensation von Störungen arbeiten als Regelkreis und weisen daher eine gewisse Totzeit auf. Der Regelvorgang kann sowohl beim spontanen Erscheinen der Störungen als auch beim Verschwinden der Störungen erfolgen. In diesen Phasen ist der Funkempfang von Nutzsignalen in den meisten Fällen nicht möglich. Zusammen mit Regelkreisen zur automatischen Verstärkereinstellung (engl.: Automatic Gain Control, AGC), die aufgrund begrenzter Ansteuerbarkeit von Funkempfängern den Empfangspegel auf einen eingeschränkten Bereich einstellen sollen, ergeben sich aufgrund der Dynamik der Nutzsignalpegel als auch der Störpegel teilweise erhebliche Schwierigkeiten beim fehlerfreien Funkempfang.

Störungen können sein: (meist unkoordinierte oder spontane) Funksignale Dritter, die eine Nutzung des Funksignals temporär erschweren bzw. teilweise unmöglich machen. Funkübertragungen weisen dann sehr hohe Fehlerraten auf, die eine Fehlerkorrektur nicht mehr kompensieren kann. Funkübertragungsversuche zur Informationsübermittlung scheitern dann. Bei Nutzung des Funkkanals durch viele überwiegend unkoordinierte Teilnehmer vor allem in großen Räumen wie z. B. Messehallen, Flughäfen, Bahnhöfen, Warenhäusern, Konzertsälen und Stadien weist der Funkkanal stationäre Übertragungseigenschaften auf.

Das Einführen von Redundanz bei der Signalaussendung stößt beim gestörten Funksignal meist an Grenzen. Außerdem ist eine signifikante Verlängerung der Funkaussendung auf ein Mehrfaches in den Fällen von gestörtem Funkempfang nachteilig. Der Funkkanal ist länger belegt, was die Zugänglichkeit für andere Funkteilnehmer stark einschränkt. Beim Versagen der Fehlerkorrektur auf der Empfängerseite muss dann eine Rücksendung einer Aufforderung zur Wiederholung der Funkaussendung erfolgen, was wiederum den Funkkanal belegt, ebenso wie die nochmalige Funkaussendung. Die Leistungsaufnahme auf der Sendeseite ist dadurch ebenfalls erhöht, weil länger gesendet werden muss, sowohl aufgrund der zugefügten Redundanz als auch bei wiederholter Funkaussendung.

Wünschenswert wären demnach Konzepte für Funk-Transceiver, die es ermöglichen, Signale fehlerarm zu übertragen, um eine ressourcenschonende Nutzung des Funkkanals zu ermöglichen. Ressourcenschonend kann sich dabei sowohl auf die Ressourcen oder Belegung des Funkkanals als auch für die Energieaufwände aufseiten des Senders und/oder Empfängers beziehen.

Eine Aufgabe der vorliegenden Erfindung ist es deshalb, eine ressourcenschonende Nutzung des Funkkanals mit einem Funk-Transceiver und einem Verfahren zum Betreiben eines Funk-Transceivers bereitzustellen.

Diese Aufgabe wird durch den Gegenstand der unabhängigen Patentansprüche gelöst.

Eine Kernidee der vorliegenden Erfindung besteht darin, erkannt zu haben, dass das Bestimmen eines Vorabergebnisses dahingehend, ob ein empfangenes Signal ein Störsignal oder ein Nutzsignal ist, und ein Anpassen von Korrelationsschwellwerten abhängig davon, ob das Vorabergebnis anzeigt, dass die Abtastwerte Merkmale einer Korrelationsfolge aufweisen oder nicht, also Nutzsignale sind oder nicht, sowohl unnötige Aufwände zum Anpassen von Korrelationsschwellwerten und unnötigem Ausführen von Korrelationen einerseits als auch eine Reduzierung von Fehlern ermöglichen kann. Im Weiteren wird hierdurch synergetisch ermöglicht, dass das Vorabergebnis vergleichsweise schnell und nahezu latzenzfrei vorliegt, was die Datenübertragung beschleunigen kann.

Gemäß einem Ausführungsbeispiel wird ein Funk-Transceiver bereitgestellt, der eine Funkschnittstelle zum Empfangen eines Funksignals und zum Bereitstellen von Abtastwerten basierend auf dem Funksignal umfasst. Der Funk-Transceiver umfasst einen Korrelator, der zum Ausführen einer Korrelation der Abtastwerte mit einem Korrelationsfolgenteil einer vorbestimmten Korrelationsfolge ausgebildet ist, um ein Korrelationsergebnis zu erhalten. Der Funk-Transceiver ist ausgebildet, um basierend auf einem Schwellwertvergleich des Korrelationsergebnisses mit einem Schwellwert ein Ergebnis zu liefern, ob die Abtastwerte der Korrelationsfolge ähneln. Der Funk-Transceiver umfasst einen Schwellwertanpasser zum Anpassen des Schwellwerts. Der Schwellwertanpasser ist ausgebildet, um eine Mehrzahl von Abtastwerten zu erhalten. Der Schwellwertanpasser ist ausgebildet, um die Abtastwerte auf ein Korrelationsfolgenmerkmal der Korrelationsfolge zu überprüfen, um ein Vorabergebnis zu erhalten, und um den Schwellwert abhängig davon anzupassen, ob die Abtastwerte das Korrelationsfolgenmerkmal aufweisen. Dies ermöglicht es, nicht allein aufgrund von Empfangsleistung oder ähnlichen Merkmalen die Korrelationsschwellwerte anzupassen, sondern abhängig davon, ob die auslösenden Ereignisse mit Nutzsignalen korreliert sind.

Gemäß einem Ausführungsbeispiel ist der Schwellwertanpasser ausgebildet, um den Korrelator mit einem ersten Schwellwert einzustellen, bei dem der Korrelator mit einem geringen Umfang auf ein Störsignal anspricht, das an der Funkschnittstelle empfangen wird, wenn das Vorabergebnis nicht anzeigt, dass die Abtastwerte das Korrelationsfolgenmerkmal aufweisen. Der Schwellwertanpasser ist ausgebildet, um den Korrelator mit einem zweiten Schwellwert einzustellen, bei dem der Korrelator mit einem hohen Umfang auf das Störsignal anspricht, wenn das Vorabergebnis anzeigt, dass die Abtastwerte das Korrelationsfolgenmerkmal aufweisen. Der Korrelator ist also unempfindlich gegenüber Signaleingängen, die das Korrelationsfolgenmerkmal nicht aufweisen und empfindlich oder sensitiv für als Nutzsignal identifizierte Signale. Dies ermöglicht die Vermeidung unnötiger Aufwände aufseiten des Empfängers.

Gemäß einem Ausführungsbeispiel ist der Korrelator ausgebildet, um die Korrelation mit einem veränderlichen und während der Korrelation durch den Schwellwertanpasser eingestellten Schwellwert auszuführen. Dies ermöglicht die Anpassung während der Korrelation, was eine Reduzierung von Latenzen ermöglicht.

Gemäß einem Ausführungsbeispiel ist der Funk-Transceiver ausgebildet, um den ersten Schwellwert basierend auf und insbesondere nahe an einem erwarteten Maximalwert des Korrelationsergebnisses einzustellen. Damit können Störsignale in hohem Umfang ausgeblendet werden.

Gemäß einem Ausführungsbeispiel umfasst das Korrelationsfolgenmerkmal eine Wertedifferenz zwischen Abtastwerten und der Schwellwertanpasser ist ausgebildet, um eine Teilmenge der Abtastwerte auf das Vorliegen der Wertedifferenz zu überprüfen, wobei das Vorabergebnis basierend darauf erhalten wird, ob die Wertedifferenz in der Teilmenge vorliegt. Dies ermöglicht eine unkomplexe Auswertung des Korrelationsfolgenteils.

Gemäß einem Ausführungsbeispiel ist der Schwellwertanpasser ausgebildet, um eine Unterteilmenge der Teilmenge zu bestimmen und für das Einstellen des Schwellwerts zumindest teilweise unberücksichtigt zu lassen, wenn das Vorabergebnis anzeigt, dass die Wertedifferenz in der Teilmenge nicht vorliegt und um den Schwellwert unter Berücksichtigung der Unterteilung einzustellen, wenn das Vorabergebnis anzeigt, dass die Wertedifferenz in der Teilmenge vorliegt. Die Wertedifferenz kann einen Hinweis auf ein positives Korrelationsergebnis liefern. Ist dies nicht gegeben und liegt die Wertedifferenz demzufolge nicht vor, kann unter Beibehaltung der Korrelationsschwellwerte bzw. dem Ausblenden oder Unberücksichtigt-Lassen der Unterteilmenge eine womöglich zu Fehlern führende Anpassung der Korrelationsschwellwerte vermieden werden, was vorteilhaft ist.

Gemäß einem Ausführungsbeispiel ist der Schwellwertanpasser ausgebildet, um basierend auf einer ersten Gruppe von Minimalwerten der Unterteilmenge einen Referenzwert zu bestimmen und um basierend auf einer zweiten Gruppe von Maximalwerten der Unterteilmenge zu überprüfen, ob die Abtastwerte der zweiten Gruppe zumindest die Wertedifferenz zu dem Referenzwert aufweisen. Dies ermöglicht eine besonders einfache und aufwandsarme Auswertung der Unterteilmenge.

Gemäß einem Ausführungsbeispiel ist eine Anzahl der ersten Gruppe und eine Anzahl der zweiten Gruppe basierend auf einer erwarteten Verteilung der Abtastwerte in der Unterteilmenge eingestellt. Dies ermöglicht ein hohes Maß an Übereinstimmung beim Ausführen von Vergleichen.

Gemäß einem Ausführungsbeispiel ist eine Anzahl der ersten Gruppe basierend auf der Regel

$$A = (MW - ER) \cdot X1$$

ausgewählt wird; und/oder

$$B = (MW - ER) \cdot X2$$

bei dem eine Anzahl der zweiten Gruppe basierend auf der Regel
wobei A die Anzahl der ersten Gruppe, B die Anzahl der zweiten Gruppe; MW die Abtrastwrate; ER eine korrigierbare Anzahl von Bitfehlern in einer Bitfolge des Funksignals, X1 der Anteil der von Minimalwerten in der fehlerfreien Bitfolge und X2 der Anteil der von Maximalwerten in der fehlerfreien Bitfolge beschreibt.

Gemäß einem Ausführungsbeispiel ist der Schwellwertanpasser ausgebildet, um den Schwellwert bei Vorliegen des Vorabergebnisses basierend auf einem Mittelwert einer Unterteilmenge der Abtastwerte zu bestimmen. Das Vorabergebnis kann insofern zu einer Berücksichtigung der Unterteilmenge führen, was die Detektionsgenauigkeit erhöht, wobei dieses Vorgehen an das Vorliegen des Vorabergebnisses gekoppelt ist, um Fehler zu vermeiden.

Gemäß einem Ausführungsbeispiel ist die Funkschnittstelle ausgebildet, um zeitlich aufeinanderfolgende zusätzliche Abtastwerte bereitzustellen. Der Schwellwertanpasser ist ausgebildet, um das Vorabergebnis wiederholt und unter Verwendung der zusätzlichen Abtastwerte zu erhalten. Dies ermöglicht eine kontinuierliche Anpassung der Schwellwerte.

Gemäß einem Ausführungsbeispiel ist der Funk-Transceiver ausgebildet, um die Mehrzahl von Abtastwerte um die zusätzlichen Abtastwerte zu erweitern, womit Unsicherheiten in der Ergebnisbestimmung reduziert werden.

Gemäß einem Ausführungsbeispiel ist der Funk-Transceiver ausgebildet, um den Korrelator mit einem ersten Schwellwert zu initialisieren, wobei der Schwellwertanpasser ausgebildet ist, um den Schwellwert auf einen zweiten und gegenüber dem ersten Schwellwert empfindlicheren Schwellwert anzupassen, wenn das Vorabergebnis anzeigt, dass die Abtastwerte das Korrelationsfolgenmerkmal aufweisen. Die Initialisierung mit einem unempfindlichen Schwellwert ermöglicht die Vermeidung ungewollter Aktionen oder Ergebnisse.

Gemäß einem Ausführungsbeispiel umfasst ein Verfahren zum Betreiben eines Funk-Transceivers ein Bereitstellen von Abtastwerten einer Funkschnittstelle, ein Ausführen einer Korrelation der Abtastwerte mit einem Korrelationsfolgenteil einer vorbestimmten Korrelationsfolge, um ein Korrelationsergebnis zu erhalten, so dass basierend auf einem Schwellwertvergleich des Korrelationsergebnisses mit einem Schwellwert ein Ergebnis erhalten wird, ob die Abtastwerte der Korrelationsfolge ähneln. Das Verfahren umfasst ein Überprüfen einer Mehrzahl von Abtastwerten auf ein Korrelationsfolgenmerkmal der Korrelationsfolge, um ein Vorabergebnis zu erhalten. Das Verfahren umfasst ein Anpassen des Schwellwerts abhängig davon, ob die Abtastwerte das Korrelationsfolgenmerkmal aufweisen.

Weitere Ausführungsformen sind der Gegenstand weiterer abhängiger Patentansprüche.

Bevorzugte Ausführungsformen der vorliegenden Erfindung werden nachfolgend Bezug nehmend auf die beiliegenden Zeichnungen erläutert. Es zeigen:

Fig. 1          ein schematisches Blockschaltbild eines Funk-Transceivers gemäß einem Ausführungsbeispiel;

Fig. 2          ein schematisches Blockschaltbild zumindest eines Teils eines weiteren Funk-Transceivers gemäß einem Ausführungsbeispiel;

Fig. 3          einen schematischen Aufbau eines Superregenerativ-Empfängers mit Zähler;

Fig. 4a-b       zeitliche Verläufe von Einschwingvorgängen an einem Oszillator mit unterschiedlichen Einschwingzeiten im Zusammenhang mit Ausführungsbeispielen;

Fig. 5          eine schematische Darstellung von Oszillationen einer Oszillatorspannung sowie eines Zählerwerts an einer übereinstimmenden Zeitachse im Zusammenhang mit Ausführungsbeispielen;

Fig. 6          einen zeitlichen Verlauf einer Amplitude eines im Funkempfänger empfangenen Funksignals im Zusammenhang mit Ausführungsbeispielen;

Fig. 7a-b       Verläufe von Kreuzkorrelationsfunktionen im Zusammenhang mit Ausführungsbeispielen;

Fig. 8a-b       Kreuzkorrelationsfunktionen mit unterschiedlichen Schellwerten im Zusammenhang mit Ausführungsbeispielen;

Fig. 9          eine schematische Darstellung einer zeitlichen Abfolge von N Abtastwerten als Amplitudenwert (Samples) und einer Unterauswahl davon;

Fig. 10         eine schematische Darstellung einer KKF-Kurve im Zusammenhang mit Ausführungsbeispielen;

Fig. 11         einen Verlauf von Schwellwerten, die mit einem erfindungsgemäßen Schwellwertanpasser erreicht werden kann;

Fig. 12         beispielhaft 8 aus den Abtastwerten bzw. der gewählten Teilmenge M extrahierte Maxima-Werte und 8 Minima-Werte dargestellt;

Fig. 13         Pseudo-Code zur Erörterung hierin beschriebener Ausführungsbeispiele; und

Fig. 14         ein schematisches Ablaufdiagramm eines Verfahrens gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

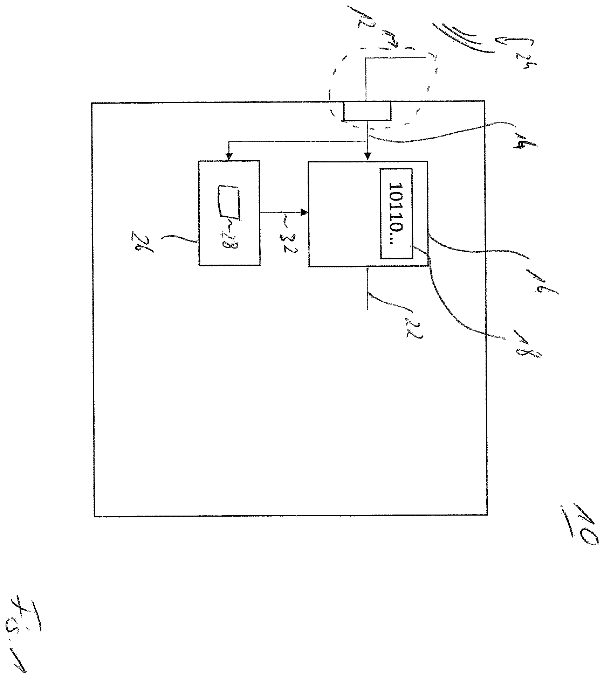

Fig. 1 zeigt ein schematisches Blockschaltbild eines Funk-Transceivers 10 gemäß einem Ausführungsbeispiel. Der Funk-Transceiver 10 umfasst eine Funkschnittstelle 12 zum Empfangen eines Funksignals und zum Bereitstellen von Abtastwerten 14 basierend auf dem Funksignal. Die Abtastwerte 14 können beispielsweise Amplitudenwerte aufweisen, können aber auch abgeleitete Werte sein, etwa Zählerwerte (engl.: Counts, CNT), was später noch detailliert beschrieben wird. Der Funk-Transceiver 10 umfasst einen Korrelator, der zum Ausführen einer Korrelation der Abtastwerte 14 mit einem Korrelationsfolgenteil 18 einer vorbestimmten Korrelationsfolge ausgebildet ist. Der Korrelationsfolgenteil 18 kann einen Teil der vorbestimmten Korrelationsfolge bilden oder die gesamte Korrelationsfolge umfassen. Der Korrelator 16 ist ausgebildet, um aus der Korrelation ein Korrelationsergebnis 22 zu erhalten. Basierend auf einem Schwellwertvergleich des Korrelationsergebnisses 22 mit einem Schwellwert wird ein Ergebnis durch den Funk-Transceiver geliefert, ob die Abtastwerte 14 der Korrelationsfolge ähneln. Dies kann mit unterschiedlichen Informationen verknüpft sein, etwa ob der Funk-Transceiver 10 Empfänger eines Funksignals 24 ist, welches die Abtastwerte 14 auslöst oder ob der Funk-Transceiver 10 das Funksignal 24 als Störer behandelt.

Der Funk-Transceiver 26 umfasst einen Schwellwertanpasser 26 zum Anpassen des Schwellwerts des Korrelators. Der Schwellwertanpasser 26 ist ausgebildet, um eine Mehrzahl von Abtastwerten 14 zu erhalten. Dabei kann der Schwellwertanpasser 26 die Abtastwerte 14 in einem gleichen Umfang oder in einem reduzierten Umfang erhalten, etwa in Form einer Auswahl oder Teilmenge. Der Schwellwertanpasser 26 ist ausgebildet, um die Abtastwerte 14 auf ein Korrelationsfolgenmerkmal der Korrelationsfolge zu überprüfen, um ein Vorabergebnis 28 zu erhalten und um den Schwellwert abhängig davon anzupassen, ob die Abtastwerte das Korrelationsfolgenmerkmal aufweisen, etwa indem ein Schwellwertanpassungssignal oder Schwellwertanpassungskommando 32 gesendet wird.

Das Korrelationsfolgenmerkmal kann beispielsweise dahingehend ausgewertet werden, ob eine erwartete Anzahl von Maximalwerten der Abtastwerte innerhalb einer bestimmten Teilmenge von Abtastwerten vorliegt. Ist dies nicht der Fall, etwa indem die tatsächliche Anzahl von Maximalwerten zu gering ist, kann dies als Hinweis dahingehend verstanden werden, dass ein spontaner Störer vorliegt, der mangels Übereinstimmung mit einer Verteilung von Null-Werten und Eins-Werten nicht die erwartete Anzahl von Maximalwerten aufweist und deshalb vom erwarteten Korrelationsfolgenmerkmal abweicht, weshalb der Empfang bzw. die Detektion zum Bestimmen der Schwellwerte unberücksichtigt bleiben kann.

Der Korrelator 16 und der Schwellwertanpasser 26 können dabei unabhängig voneinander implementierte Berechnungseinrichtungen mit individueller Hardware und/oder Software umfassen. Es ist aber ebenso möglich, den Korrelator 16 und den Schwellwertanpasser 26 mit einer gemeinsamen Berechnungseinrichtung bereitzustellen.

Hierin beschriebene Ausführungsbeispiele ermöglichen den Erhalt einer Vorrichtung zum vorzugsweise stromsparenden Empfang von Funksignalen. Die Signalrekonstruktion kann sogenannte Korrelationssignale nutzen, d. h., Signalfolgen mit ausgeprägter Autokorrelationsfunktion, die nahe einem Dirac-Einheitspuls ausgeformt sind. Sogenannte Pseudonoise-Sequenzen erfüllen diese Voraussetzungen und sind in der Technik bereits im Einsatz. Bevorzugt werden im Rahmen hierin beschriebener Ausführungsbeispiele jedoch solche Korrelationsfolgen eingesetzt, die auch eine fehlertolerante Decodierung ermöglichen, d. h., eine Rekonstruktion soll auch bei Anwesenheit beliebig verteilter Störungen während des Empfangs der Korrelationsfolgen im Funksignal ohne Rückfrage möglich sein.

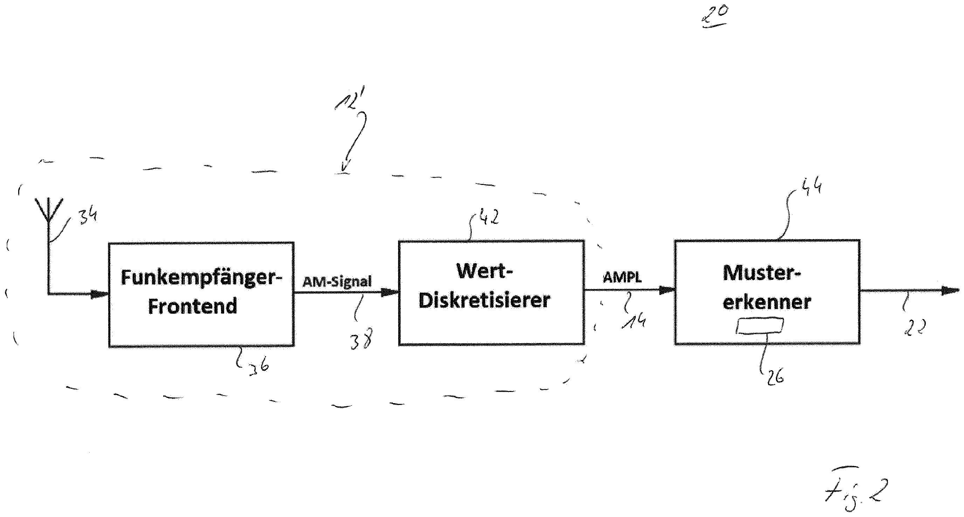

Fig. 2 zeigt ein schematisches Blockschaltbild zumindest eines Teils eines Funk-Transceivers 20 gemäß einem Ausführungsbeispiel. Dieser umfasst die Funkschnittstelle 12', welche beispielsweise eine Antenneneinrichtung 34, ein Funkempfänger-Frontend 36 zum Liefern eines amplitudendemodulierten (AM) Signals 38 sowie einen Wert-Diskretisierer 42 aufweist, der ausgebildet ist, um Abtastwerte 14, etwa in Form von Amplitudenwerten (AMPL), bereitzustellen. Die Funkschnittstelle 12' ist eine mögliche Ausgestaltung der Funkschnittstelle 12 aus Fig. 1.

Der Funk-Transceiver 20 umfasst einen Korrelator 44, der die Funktion des Schwellwertanpassers 26 bereits mit umfasst und auch als Mustererkenner bezeichnet werden kann. Der Korrelator 44 kann das Korrelationsergebnis 22 bereitstellen. Dies kann auch als Code-Match-Signal bezeichnet werden, da es angibt, ob ein empfangenes Funksignal mit der Korrelationsfolge übereinstimmt, ob die Codes übereinstimmen.

Der Funkempfänger oder Transceiver 20, vorzugsweise für Hochfrequente (HF), Ultrahochfrequente (HF) oder auch Niederfrequente (Low Frequency, LF) -Signale, kann Funksignale empfangen und die Amplitudenwerte des Trägersignals (auf einer Trägerfrequenz $f_1$) umsetzen, in vorzugsweise wertdiskrete Amplitudensignale. Diese Umsetzung ist jedoch optional, die Amplitudenwerte bzw. das Amplitudensignal 38 kann bereits als Abtastwerte verwendet werden. Die Abtastwerte 14 können analog oder digital sein.

In anderen Worten zeigt Fig. 2 einen schematischen Aufbau eines Funkempfängers mit Mustererkennung.

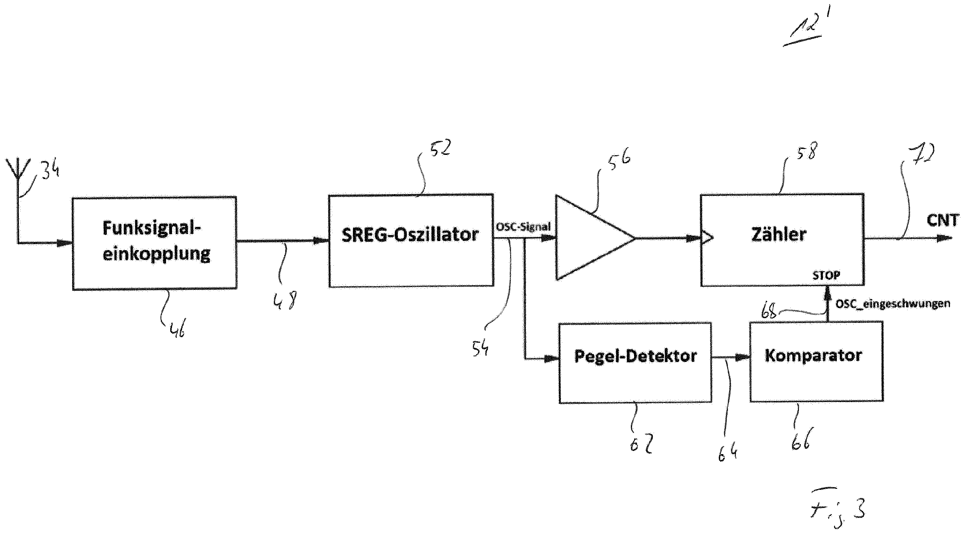

Fig. 3 zeigt ein schematisches Blockschaltbild einer möglichen Ausgestaltung der Funkschnittstelle 12' aus Fig. 2. Diese weist die Antennenstruktur 34 für eine Funksignaleinkopplung 46 auf. In einer möglichen Ausgestaltung liefert die Funksignaleinkopplung 46 Eingangswerte 48 für einen Oszillator 52, der beispielsweise als Superregenerativ (SREG) - Oszillator bildet ist, und der ausgebildet ist, um ein Oszillatorsignal 54 bereitzustellen. Dieses kann durch einen optionalen Verstärker verstärkt werden und einer Zählereinrichtung 58 zum Zählen von Schwingungen zugeführt werden. Das Oszillatorsignal 54 kann parallel hierzu einem Pegel-Detektor 62 zugeführt werden, der ein Eingangssignal 64 für einen Komparator 66 liefert, welcher bestimmt, ob das Oszillatorsignal 54 eingeschwungen ist. Ein derartiges Ergebnis 68 kann an die Zählereinrichtung 58 geliefert werden, um das Zählen zu beenden, so dass der dann erhaltene Zählerwert 72 (CNT) eine Grundlage für einen Abtastwert oder den Abtastwert bilden kann.

In anderen Worten zeigt Fig. 3 einen schematischen Aufbau eines Superregenerativ-Empfängers mit Zähler.

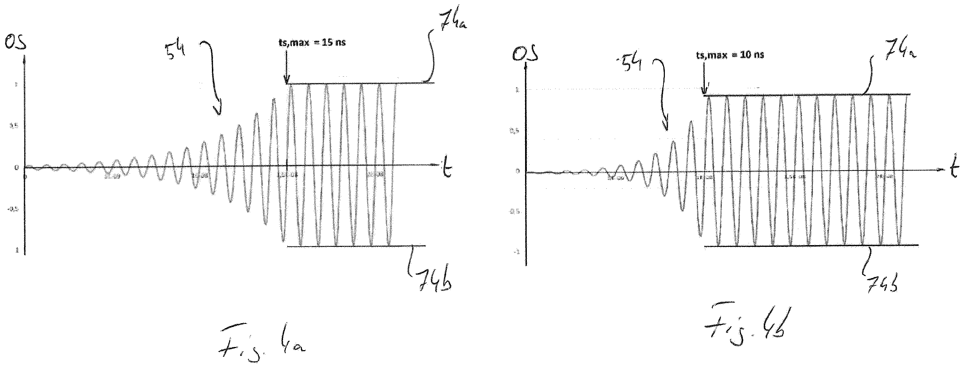

Der Funk-Transceiver oder Funkempfänger 20 kann die Amplitudenwerte 14 z. B. durch den Einsatz von Zählern wie etwa bei einem Superregenerativ-Empfänger, wie er in Fig. 3 dargestellt ist, erhalten. Dessen Oszillator-Einschwingzeit kann von der Trägeramplitude des Empfangssignals bei Frequenz $f_1$ bestimmt werden. Eine niedrige Trägeramplitude kann zu einer vergleichsweise größeren Einschwingzeit führen, siehe Fig. 4a als eine hohe Trägeramplitude, welche im Allgemeinen zu einer vergleichsweise geringeren Einschwingzeit führen kann, siehe Fig. 4b. Die Einschwingzeit ist durch die Einschwingzeit ts,max bei Abwesenheit eines äußeren Funksignals nach oben beschränkt.

Der Zählerstand kann im Falle des Zählens der Trägerperioden (bei Frequenz $f_1$) als indirektes Maß für die Trägeramplitude herangezogen werden. Die aufwendigeren Wertdiskretisierungen mit Analog-Digital-Umsätzen sind gerade bei Aspekten wie der Signaldynamik, der Stromaufnahme, der Komplexität und begrenzter Auflösung einem Zählverfahren deutlich unterlegen, weshalb das Zählverfahren nicht notwendigerweise im Rahmen der vorliegenden Erfindung implementiert werden muss, aber in bevorzugten Ausführungsformen eingesetzt wird. Der Zählerstand CNT kann nach dem erfolgten Einschwingen bequem als Digitalwert weiterverarbeitet werden. Der Zählerwert 72 ist eine bevorzugte Ausführungsform hierin beschriebener Abtastwerte 14.

Vorzugsweise ist beim Superregenerativ-Empfänger die Feststellung der Einschwingzeit des internen Oszillators nach der Aufklingphase und mit dem Erreichen des Schwingzustands mit Endpegel im Zeitpunkt ts,max vollendet. Dies ist in den Fig. 4a und 4b durch Linien 74a und 74b dargestellt, die einen Bereich markieren, wo der Oszillator eingeschwungen ist, d. h., die Maximalwerte von Schwingungen der Oszillatorspannung OS sind im Wesentlichen unverändert. Die beispielhaft angegebenen Werte von 10 ns und 15 ns für das Einschwingverhalten sind lediglich exemplarisch gewählt und schränken hierin erörterte Ausführungsbeispiele nicht ein. Die Verwendung anderer Signale und/oder anderer Oszillatoren ermöglicht beliebige andere Werte für die Einschwingzeit.

In Fig. 4a ist ein zeitlicher Verlauf des Einschwingvorgangs am Oszillator für die Einschwingzeit 15 ns gezeigt. In Fig. 4b ist ein zeitlicher Verlauf des Einschwingvorgangs am Oszillator 52 für eine geringere Einschwingzeit von 10 ns gezeigt. Aus Gründen der deutlichen Absenkung der Leistungsaufnahme bei modernen Funkempfängern oder Funk-Transceivern ist die zeitliche Abfolge für den Betrieb eines Superregenerativ-Empfängers beispielsweise wie folgt: Die Feststellung der momentanen Trägeramplitude beim Empfangssignal der Frequenz $f_1$ ist vollzogen. Dabei wird ein amplitudenmoduliertes Funksignal mit einer Datenrate 1/TB bei der Modulation vorausgesetzt. In besonderen Fällen kann auch eine andere Modulation, etwa eine 2-ASK, ein On-Off-Keying (OOK) oder allgemein eine M-ASK-Modulation neben der reinen AM (Amplitudenmodulation) verwendet werden. Der Funkempfänger kann beispielsweise für eine vergleichsweise kurze Zeitspanne TON eingeschaltet werden, wobei $T_{ON}$ viel kleiner als TB (Bitdauer) ist, so dass gelten kann

$$TON \ll TB$$

vorzugsweise mehrere Größenordnungen. TON ist dabei immer noch so groß, dass die Oszillator-Einschwingzeit ts,max innerhalb des Superregenerativ-Empfängers noch voll erfasst wird, also

$$TON \geq ts,max.$$

Dies gelingt umso leichter, wenn HF- bzw. UHF-Oszillatoren benutzt werden, wo die Einschwingzeit nur wenige Nanosekunden betragen kann, etwa 90 ns oder weniger, etwa bei Betriebsfrequenzen der Oszillatoren von 1 GHz oder höher. Die Einschaltdauer TON sei hierbei beispielhaft mit 100 ns angenommen. Die Modulation der Funksignale kann über eine Bitdauer TB von 100 μs erfolgen, was einer Modulationsrate von 10 kb/s entsprechen kann. Der Funkempfang erfolgt in dem angenommenen Beispiel auf einer Frequenz von 1 GHz.

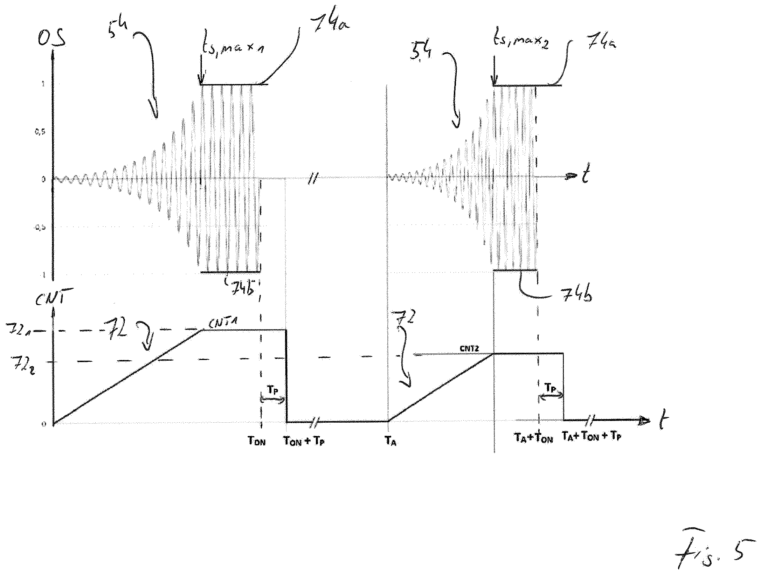

Gemäß Ausführungsbeispielen kann der Funkempfänger nach Erreichen der Einschwingzeit plus einer Zeitspanne für interne Vorgänge wieder abgeschaltet werden, nämlich nach TON. Dann ist eine längere Pause TP zu verstreichen, so dass der nächste Einschaltvorgang rechtzeitig nach

$$TON + TP \leq TB$$

erfolgen kann. Eine Wiederholung mit variabler Zeit "TON + TP" oder lediglich TP ist ebenfalls vorstellbar. Vorzugsweise erfolgt das Einschalten periodisch, es ist aber auch eine möglicherweise zufällige Variation um einen Periodenmittelwert möglich, dann kann die Periodendauer für den Einschaltvorgang TA genannt werden, siehe hierzu Fig. 5. Es kann gelten:

$$TA \leq TB.$$

In Fig. 5 sind beispielhaft Oszillationen der Oszillatorspannung 54 sowie des Zählerwerts 72 an einer übereinstimmenden Zeitachse t dargestellt. In Fig. 5 ist erkennbar, dass die Einschwingzeit ts,max direkt mit den Zählerwerten CNT korreliert und eine längere Einschwingzeit $ts,max_1$ mit einem höheren Zählerwert CNT1, siehe Bezugszeichen $72_1$ einhergeht gegenüber einer verkürzten Einschwingzeit $ts,max_2$.

Fig. 5 zeigt dabei ein wiederholtes Einschalten des Oszillators mit jeweils neuer Feststellung des Zählerstands CNT. TA kann bevorzugt den Wert der Bitdauer TB nicht überschreiten, damit zu jedem Datenbit der Dauer TB auch mindestens ein Empfangsvorgang mit Feststellung der Trägeramplitude erfolgen kann. Dies erfolgt bevorzugt so häufig, wie es für eine erfolgreiche Signalrekonstruktion oder Nutzdatenrekonstruktion erforderlich ist. Bei einer angenommenen digitalen Modulationsart beim Sendesignal (etwa M-ASK) kann im Allgemeinen ein einzelner Einschaltvorgang pro gesendeter Bitdauer ausreichend sein.

Eine höhere Anzahl kann dennoch zusätzliche Informationen liefern. Der Empfänger nimmt vorzugsweise nur eine zeitliche kurze Probe vom Antennensignal, verglichen mit der Einschaltperiode TA. Die mittlere Stromaufnahme I_avg des Funkempfängers kann ausgedrückt werden als

$$I\_avg = I\_RX * TON / TA,$$

wobei I_RX die Stromaufnahme des Funkempfängers im eingeschalteten (Aktiv-) Zustand ist. Wird als Abtastperiode TA vorzugsweise die Sendebitdauer TB gewählt (hier beispielhaft 100 $\mu$s) und die Einschaltdauer TON von 100 ns, so ergibt sich eine Absenkung der Empfängerstromaufnahme um 3 Größenordnungen, d. h., um den Faktor 1000. Bei einer angenommenen Empfängerstromaufnahme im Aktiv-Zustand I_RX von 2 mA ist nun die durchschnittliche Stromaufnahme I_avg nur noch 2 $\mu$A. Dies ist vor allem für batteriebetriebene Funkmodule oder solche mit lokaler Energieerzeugung, etwa unter Verwendung von Energy Harvesting mit Solarzellen, Mikrovibrationswandlern, thermoelektrischen Generatoren oder dergleichen, interessant, um beim Einsatz von marktüblichen Knopfzellen (etwa LiMn-Zellen mit niedriger Selbstentladung) Betriebsdauern von mehreren Jahren zu erreichen. Die hierin erörterten Zahlenwerte sind dabei lediglich beispielhaft gewählt, um die Vorteile der Erfindung zu verdeutlichen. Eine Realisierung auf Basis dieser Zahlenwerte ist zwar möglich, schränkt die Ausführungsbeispiele jedoch nicht ein. Es ist klar, dass beliebige andere Implementierung der Betriebszeiten, der Abschaltzeiten, der Stromaufnahme, der Zählerwerte oder dergleichen problemlos implementierbar ist.

Der bei einigen oder jedem Abtastvorgang gewonnene Zählerstand wird nun bspw. aber nicht notwendigerweise jedes Mal einer Verarbeitungseinheit (vorzugsweise digital) zugeführt und mit einem Mustererkenner analysiert. Dieser wird vorzugsweise digital als mehrwertiger Korrelator ausgeführt. Eine vorzeitige Diskretisierung mit einem Komparator (bzw. einem 1-Bit-Analog-Digital-Umsetzer) zur Erzeugung von binären Digitalsignalen (sog. "hard decision decoding") soll hier bewusst nicht verfolgt werden, damit der Funkempfang auch für besonders schwache Funksignale und für stark gestörte Funksignale noch erfolgreich gelingen kann ("soft decision decoding"). Zwar kann ein solches Konzept mit umgesetzt werden, dies ist aber für das Erreichen der erfindungsgemäßen Vorteile nicht erforderlich.

Im Folgenden wird angenommen, dass vorzugsweise Korrelationsfolgen der Länge N (z. B. N = 32) empfangen und decodiert werden sollen. Die Werte für N können einen beliebigen Wert von zumindest 2, zumindest 8, zumindest 10, zumindest 12, zumindest 13, zumindest 15, zumindest 20, zumindest 25 Werten oder auch Werte von mehr als 32, etwa zumindest 40, zumindest 48 oder zumindest 100.

Damit kann beispielsweise der Beginn einer Funknachricht markiert oder sogar die Nutzdaten selbst durch Nutzung der Korrelationsfolgen selbst umcodiert sein. Entscheidend ist, dass die verwendeten Korrelationsfolgen (vorzugsweise mehr als nur eine Folge) eine klar ausgeprägte Dirac-ähnliche Autokorrelationsfunktion aufweisen mit einem ausgeprägtem Hauptmaximum und deutlich schwächer ausgeprägten Nebenmaxima. Vorzugsweise sollen die Korrelationsfolgen diese AKF-Signalform auch bei gestörtem Empfang beibehalten. Dann kann erwartet werden, dass die Hauptmaxima innerhalb der Korrelationsberechnung etwas niedriger sind als bei ungestörtem Empfang, die Nebenmaxima jedoch sollen auch dabei verglichen mit dem Hauptmaximum genügend klein bleiben. Man kann sich dabei z.B. an Pseudo-Noise-Sequenzen orientieren. Verwendet man einen Code-Vorrat C_n, sollte sichergestellt sein, dass die n Korrelationsfolgen auch bei gestörtem Empfang kaum untereinander verwechselbar sind.

So findet man beispielsweise einige Korrelationsfolgen der Länge 32 Bit, die auch bei Anwesenheit von 4 Bitfehlern noch voneinander im Empfänger unterscheidbar bleiben. Vorzugsweise sollen die Korrelationsfolgen mittelwertfrei sein. Im Falle einer binären Sequenz mit Nullen und Einsen soll die Anzahl der Nullen gleich der Anzahl der Einsen sein. Ein Funksender kann ausgebildet sein, um daraus z. B. Null Sendeleistung oder maximale Sendeleistung abzuleiten. Es ist auch denkbar für die Daten-Nullen einen Mindest-Sendepegel zu vereinbaren. Der im Allgemeinen nicht bekannte Abstand sowie die Arten der Abschattung oder weiterer Funkdämpfung führt im Empfänger zur Unkenntnis über den zu erwartenden Empfangspegel für das ankommende Funktelegramm. Die Aufgabe des Decoders innerhalb des Funkempfängers ist, die Korrelationsfolgen des Senders möglichst fehlerfrei zu rekonstruieren, insofern die Nummer der verwendeten Korrelationsfolge innerhalb des Code-Vorrats C_n festzustellen ist. Dies kann für die Rekonstruktion der Originalnutzdaten verwendet werden.

Die allgemeine Schwierigkeit ist nun, die mit jedem Abtasttakt erzeugten Amplitudenwerte $\hat{a}_i$ fortlaufend einem Korrelator zuzuführen, auch dann, wenn keine Nutzsignale vom Funksender abgestrahlt wurden. Der Funkempfänger empfängt fremde Nutzsignale, Rausch-und Störsignale, die ständig im Korrelator verarbeitet werden. Dabei wird fortlaufend ein Korrelationssignal erzeugt, so dass manchmal auch Spitzenwerte als Einzelimpulse auftreten, jedoch ohne Vorhandensein der bekannten Korrelationsfolgen im Empfangssignal. Die auftretenden Spitzenwerte weisen vergleichsweise niedrige Werte auf, die im Allgemeinen beim Empfang von Nutzsignalen bei Verwendung der vereinbarten Korrelationsfolgen viel höher ausfallen. Die mit Ausführungsbeispielen gelöste Schwierigkeit bei der mehrwertigen Auswertung von Amplitudenwerten mit einem Korrelator ist die mangelnde Kenntnis von Eigenschaften des Nutzsignals. So ist im Allgemeinen die Empfangsamplitude dem Empfänger nicht bekannt und auch nicht der Zeitpunkt, ab dem die Korrelationsfolgen ausgestrahlt werden. Darüber hinaus ist der Empfangsrauschpegel in realen Situationen ebenfalls nicht bekannt, auch nicht die Stärke und Häufigkeit von empfangenen Funkstörsignalen. Das erschwert die optimale Erkennung vor allem schwacher Funksignale, die mit den vereinbarten Korrelationsfolgen erzeugt wurden.

Der Korrelator soll so eingestellt werden, dass er zur richtigen Erkennung der gesendeten Korrelationsfolgen stets eine adäquate Entscheidungsschwelle Korrel_Thresh verwendet. Erst wenn das Momentanergebnis des Korrelators (der KKF-Wert) oberhalb oder gleich der Schwelle Korrel_Thresh liegt, kann mit entsprechend hoher Wahrscheinlichkeit von der Erkennung einer vereinbarten Korrelationsfolge ausgegangen werden. Dies wird im Rahmen von Ausführungsbeispielen als das Bestimmen und der Erhalt eines Vorabergebnisses bezeichnet, also einer Vorabprüfung, um bspw. davon auszugehen ist, dass eine Korrelationsfolge anstelle eines Störsignals empfangen wurde.

Der Korrelator hat bspw. eine bestimmte Folge erkannt. Im Falle der mehrfachen, vorzugsweise parallelen Ausführung der Korrelation mit verschiedenen Referenz-Korrelationsfolgen - einer sogenannten Korrelator-Bank - werden mehrere KKF-Werte ausgegeben. In diesem Fall soll das Maximum der KKF-Werte ermittelt und dies mit einer Korrelator-Schwelle Korrel_Thresh verglichen werden. Liegen ausnahmsweise mehrere KKF-Werte oberhalb der Schwelle, wird ja nur die Folge als erkannt zugewiesen, deren KKF-Wert unter allen KKF-Werten der Korrelatoren-Bank maximal ist.

Der Sonderfall, dass mehrere KKF-Werte denselben Maximal-Wert aufweisen und somit eine eindeutige Zuordnung zur jeweiligen Korrelationsfolge nicht erfolgen kann, ist nur bei sehr schwachen Funksignalen oder bei sehr stark gestörten Funksignalen zu erwarten, weil dann beispielsweise die Korrelationsfolgen am Empfänger störbedingt nicht mehr genügend unterscheidbar sind. In diesem Fall kann der Decoder ein Fehlersignal liefern oder eben keine Korrelationsfolge zuordnen.

## Geeignete Wahl der Korrelationsfolgen für die Funkaussendung

Die Vorauswahl der Korrelationsfolgen bezüglich Immunität gegenüber Pulsstörern bestimmt die Toleranz gegenüber spontanen Störsignalen beim Empfängerbetrieb. Benutzt man hingegen Korrelationsfolgen, deren günstige Dirac-ähnliche AKF-Eigenschaft bereits bei 1 oder 2 Bitfehlern schon nicht mehr in der Korrelation sichtbar sind, wird der praktische Empfang von Funksignalen in gestörter Umgebung auch mit Korrelator nur wenig störtolerant ausfallen. Benutzt man jedoch mittelwertfreie Korrelationsfolgen, d. h. Signalfolgen, deren zeitlicher Mittelwert der Amplitudenwerte stets Null ergibt, ist die Immunität gegen statische Störsignale perfekt: Es findet bei der Ermittlung der KKF kein Beitrag durch den Störpegel des statischen Störers statt, weil die Berechnung der KKF prinzipiell eine Integralberechnung über die Sequenzlänge darstellt. Im Gegenzug sind besonders stark gestörte Funkkanäle mit einem sehr niedrigen Signal-zu-Rausch-und-Stör-Abstand Anlass, besonders störsichere, d. h. fehlertolerante Codierungen zu verwenden. Das geht einher mit niedrigen Werten von etwa 1 bit/Sendesymbol. Gut geeignet für fehlertolerante Funkübertragung sind Korrelationsfolgen als Symbolalphabet [siehe Lüke, H. D.: Korrelationssignale, Springer, Berlin, 1992]. Sogenannte Gold-Codes können für die Länge 31 bits einen Codevorrat von bis zu 33 Folgen bilden [vgl. Gold, R.: "Optimal binary sequences for spread spectrum multiplexing (Corresp.)", Information Theory. In: IEEE Transactions on (1967), Vol. 13, Nr. 4, S. 619-621]. Derartige Sequenzen werden in Ausführungsbeispielen für die Aussendung und/oder den Abgleich im Korrelator genutzt.

Nutzt man beispielsweise Gold-Folgen als Korrelationsfolgen und erlaubt bei der Funkübertragung starke Störsignale, die dazu führen, dass bis zu 5 Bits innerhalb der 31 Bit der Funkaussendung gestört, d. h. beim Funkempfänger falsch geschätzt werden, zeigt sich, dass die Gold-Codes für die Länge 31 bit nur maximal 3 Fehlerbits für eine Rekonstruktion der Informationsdaten im Funkempfänger zulassen. Das entspricht einer Bitfehlerrate (BER) von 9,7%. Stärker gestörte Funkkanäle bedeuten, dass die Übertragung mit Gold-Codes nicht mehr ausreichend ist [vgl. Milosiu, H.: "Integrierter UHFFunkempfänger mit niedrigem Stromverbrauch und geringer Antwortzeit für die störsichere Datenübertragung". N&H Verlag GbR, Erlangen, 2013. Dissertation. ISBN 978-3-9808530-4-0). Eine zu hohe Fehlerzahl auf der Empfängerseite führt zu Verwechslungen verschiedener Symbole und damit zu falsch decodierten Informationen. Nach [Milosiu, H.: Integrierter UHFFunkempfänger mit niedrigem Stromverbrauch und geringer Antwortzeit für die störsichere Datenübertragung. a.a.O.] existieren binäre Korrelationsfolgen der Länge 31 bit, die eine Rekonstruktion der Sendeinformation erfolgreich im Funkempfänger bis etwa 16% Bitfehlerrate im Funkkanal ermöglichen.

Im Zusammenhang mit Ausführungsbeispielen wird eine Methode beschrieben, die implementierungsfreundlich ist, d. h. geringe Komplexität, also geringe Gatteranzahl, geringe Stromaufnahme, als auch niedrige Verarbeitungszeit erfordert. Die Methode ermittelt aus den ankommenden Amplitudenwerten eine günstige Entscheidungsschwelle Korrel_Thresh_est, die Korrelator-Fehlauslösungen durch Rausch- oder Störsignale vermeiden soll und dennoch, angepasst an den Empfangspegel Nutzsignale beliebiger Amplitude (innerhalb der Empfängerdynamik), aufgrund der verwendeten Korrelationsfolgen verzögerungsfrei im Korrelator erkennt.

Nachfolgend wird Bezug genommen auf ein Konzept im Sinne eines Funk-Transceivers und eines korrespondierenden Verfahrens zur automatischen Einstellung der Korrelationsschwelle im Korrelator des Funkempfängers. Es wird eine Methode beschrieben, die implementierungsfreundlich ist, d. h., eine geringe Komplexität aufweist, was beispielsweise durch den Einsatz einer geringen Gatteranzahl, einer geringen Stromaufnahme und/oder einer geringen Verarbeitungszeit basieren kann. Gemäß Ausführungsbeispielen wird aus den ankommenden Amplitudenwerten eine günstige Entscheidungsschwelle ermittelt, die auch als Korrel_Thresh_est bezeichnet werden kann, die Korrelator-Fehlauslösungen durch Rauschsignale und/oder Störsignale vermeidet und dennoch, angepasst an den Empfangspegel, Nutzsignale beliebiger Amplituden aufgrund der verwendeten Korrelationsfolgen womöglich sogar nahezu verzögerungsfrei im Korrelator erkennt. Der Ausdruck beliebige Amplitude bezieht sich dabei auf eine Amplitude innerhalb der Empfängerdynamik.

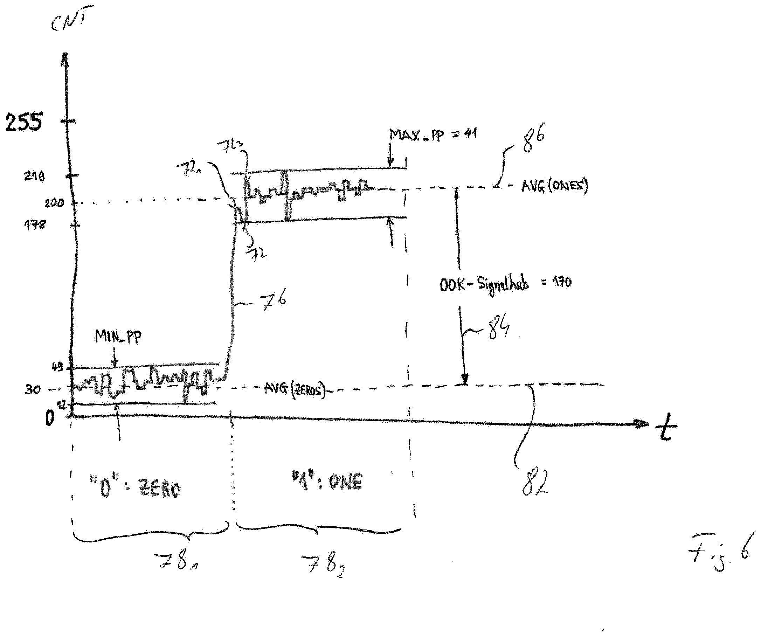

Fig. 6 zeigt ein schematisches Diagramm eines beispielhaften Zählers, etwa des Zählers 58, der womöglich zum Zählen unter Verwendung einer Anzahl von 8 Bit eingesetzt werden kann, so dass der Zählerwert 72 (CNT) einen 8bit-kodierten Wert zwischen 0 und 255 aufweisen kann. Auch diese Werte sind lediglich beispielhaft und zur anschaulichen Erörterung der hierin beschriebenen Erfindung gewählt.

Fig. 6 zeigt einen zeitlichen Verlauf der Amplitude des im Funkempfänger empfangenen Funksignals. Das dargestellte Signal ist beispielsweise ein On-Off-Keying-Signal (OOK-Signal). Hierin im Zusammenhang mit OOK beschriebene Details sind ohne weiteres auf andere Modulationsarten übertragbar, ohne von der erläuterten Erfindung abzuweichen.

Für einen ersten Zeitabschnitt 78, der Zeitachse t sind die Abtastwerte für die Amplitude beispielhaft mit CNT-Werten zwischen 12 und 49 dargestellt, wobei auch beliebige andere Werte möglich sind, die eine eindeutige Zuordnung ermöglichen.

Der Spitze-Spitze-Abstand ist mit MIN_PP bezeichnet und beträgt hier 49 - 12 = 37. Der Mittelwert 82 der beispielsweise für die "0", ZEROS angegeben ist, kann mit AVG(ZEROS) bezeichnet werden und beträgt hier gerundet 30. Ein höherer Wert von MIN_PP kann eine Anhebung des Kreuzkorrelationsfunktionen (KKF) -Bodens (Floor) bewirken, auch wenn ein OOK-Signalhub 84 unverändert bleibt. MIN_PP kann das Peak-to-Peak-Maß für den Rauschanteil der Zeros darstellen. Die Streuung der Zero-Werte kann zu höheren KKF-Nebenmaxima beitragen.

Demgegenüber sind für einen zweiten Zeitabschnitt $78_2$ Abtastwerte für die Amplitude des Signals 76 dargestellt, die als eins bzw. "1" interpretiert werden. Diese variieren in dem gezeigten Beispiel zwischen Zählerwerten von 178 und 219. Der Spitze-Spitze-Abstand kann als MAX_PP bezeichnet werden und beträgt hier beispielhaft 219 - 178 = 41. Ein Zählermittelwert 86 der Einsen kann mit AVG(ONES) bezeichnet werden und beträgt hier 200. Der OOK-Signalhub 84 kann sich aus der Differenz der Mittelwerte 86 und 82 ergeben, also der Differenz von AVG(ONES) und AVG(ZEROS):

$$OOK = AVG(ONES) - AVG(ZEROS) = 200 - 30 = 170.$$

Das kann als Maß für die Erkennbarkeit des OOK-Signals 76 im Verarbeitungsteil verstanden werten, vorzugsweise als Korrelatoren ausgeführt. Ist OOK sehr niedrig, d. h., etwa so niedrig wie MIN_PP, dann kann das OOK-Signal kaum oder nicht mehr erkennbar sein und die Rekonstruktion im Funkempfänger schlägt womöglich fehl, das Nutzsignal geht womöglich im Rauschen unter. Ist OOK jedoch größer als MIN_PP, wie in Fig. 6 gezeigt, kann die Erkennung der gesendeten Korrelationsfolge im OOK-Signal möglich sein.

Das OOK-Maß entscheidet über die Höhe der ausgeprägten KKF-Folge im Zeitverlauf. Hohe Signalhübe (große Werte für OOK) ergeben hohe KKF-Maxima und einen hohen KKF-Floor, niedrige Signalhübe (kleine Werte für OOK) ergeben niedrige KKF-Maxima und einen niedrigen KKF-Floor, die KKF-Folge skaliert mit dem OOK-Signalhub.

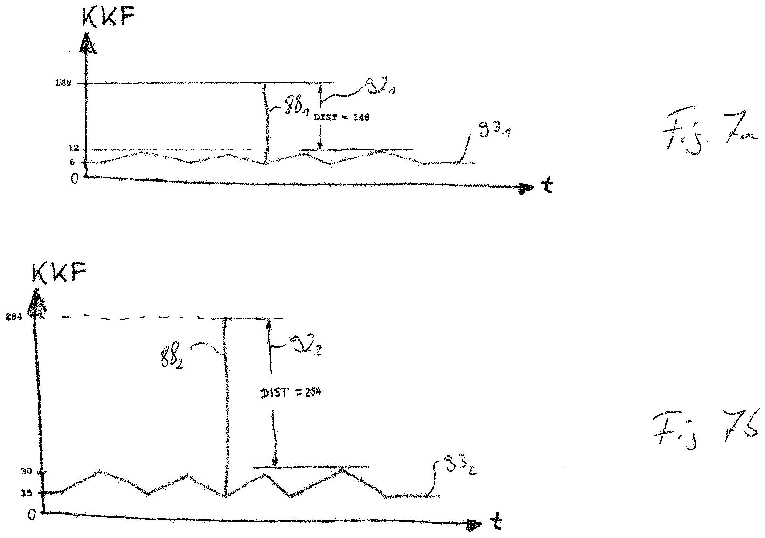

Diese Skalierung wird anhand der Fig. 7a und 7b weiter erörtert.

So zeigt Fig. 7a einen Verlauf $93_1$ einer KKF mit einem KKF-Transienten $88_1$, der beispielsweise bei einem vergleichsweise schwachen Empfangssignal mit einem OOK-Hub mit einem Wert von 10 und einem MIN_PP mit einem Wert von 6 erhalten wird. Ein Abstand $92_1$ des Maximums des KKF-Transienten $88_1$ zu einem Rauschteppich (angegeben mit dem KKF-Wert 12) beträgt beispielsweise 148 bei einem Wert des Maximums von 160.

Demgegenüber ist in Fig. 7b ein vergleichsweise starkes oder sehr starkes Empfangssignal dargestellt, bei dem der OOK-Hub eines Verlaufs $93_2$ der KKF beispielhaft einen Wert von 24 bei gleichbleibendem MIN_PP von 6 aufweist. Für das herangezogene Beispiel ist der OOK-Hub somit mit einem Faktor von 2,4 versehen. Ein KKF-Transient $88_2$ weist einen beispielhaften Wert von 284 auf, was einem Abstand $92_2$ zu einem Rauschteppich von 30 mit einem Wert von 254 ermöglicht. Die Fig. 7a und 7b verdeutlichen die Skalierung der KKF mit dem OOK-Signalhub. Darüber hinaus erhöht sich der Rauschteppich (Noise Floor), d. h., das Niveau der KKF-Werte um das Hauptmaximum herum, mit steigendem OOK-Signalhub als auch mit zunehmendem MIN_PP, d. h., der Varianz im "0"-Pegel. Fig. 7a zeigt für ein schwaches Empfangssignal mit niedrigem Empfangspegel ein KKF-Maximum bei 160, der KKF-Floor ist unterhalb 12 erkennbar. Hingegen ist bei höherem Empfangspegel gemäß der Fig. 7b das KKF-Maximum auf 284 gestiegen, da der OOK-Signalhub deutlich höher ist. Ebenfalls angestiegen ist der KKF-Floor auf 30. Die Fig. 7a und 7b zeigen dabei die KKF-Transienten für ein empfangenes Korrelationssignal einer Korrelationsfolge. Es ergibt sich, dass eine Zunahme beim OOK-Signalhub für eine Skalierung, d. h., eine Erhöhung, aller KKF-Werte die direkte Folge sein kann. Für den Empfang von Korrelationssignalen bedeutet dies, dass zeitlich vor der Aussendung der Korrelationsfolge der Empfänger einen sehr niedrigen OOK-Signalhub feststellt, denn es werden hauptsächlich Rauschbeiträge bedingt durch thermisches Antennenrauschen sowie durch das Empfängereigenrauschen im Korrelator verarbeitet. Hinzu kommt der Empfang einer Vielzahl von entfernten Störquellen, die ebenfalls zum MIN_PP-Wert beitragen. Erfindungsgemäß wird das Problem gelöst, dass es für den Empfänger vorab schwer feststellbar ist, welchen Wert der KKF-Transient aufweisen wird, d. h., auf welche Sensitivität die Vergleichsschwelle zu setzen ist.

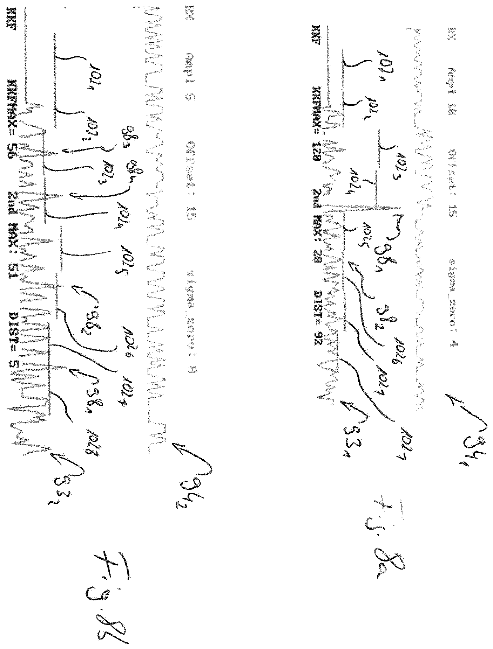

Fig. 8a zeigt die Kreuzkorrelationsfunktion $93_1$ samt erfindungsgemäß bestimmten Schwellwerten 102. In der Fig. 8b sind dynamische Störsignale im Verlauf $94_2$ enthalten und die Schwellwerte 102 falsch eingestellt, so dass Maxima $98_1$ bis $98_4$ womöglich falsch detektiert werden. In der Fig. 8b ist ein Beispiel für falsch eingestellte Korrelationsschwellen bei stark gestörtem Funkempfang gezeigt. Eine Messkurve eines Verlaufs $94_1$ von Messwerten aus einem Empfangssignal kann die Grundlage für die KKF $93_1$ bilden, etwa dem Funksignal 24. Der Verlauf 94, kann eine Vielzahl von zeitlich aufeinanderfolgenden Messwerten 14 umfassen. Fig. 8a zeigt ferner den Verlauf $93_1$ der Kreuzkorrelationsfunktion mit einem ersten Maximum $98_1$, welcher mit einem Wert KKFMAX von 120 angegeben werden kann. Ein nächstes, zweites Maximum $98_2$ weist einen Wert von lediglich 28 auf, woraus sich ein Abstand (DIST) von 92 ergibt. Anders ausgedrückt ist ein Hauptmaximum $98_1$ von einem Nebenmaximum $98_2$ gut zu unterscheiden.

Dies kann auch dadurch verdeutlicht werden, dass eine beispielhafte Empfangsamplitude einen normierten Wert von 10 aufweist (RX Ampl 10).

In Fig. 8b ist basierend auf einem anderen Verlauf $94_2$ von Abtastwerten bei einem geringeren Amplitudenwert des Empfangssignals (RX Ampl 5) ein Verlauf $93_2$ einer KKF-Funktion dargestellt. Ein erstes Maximum 98, bzw. Hauptmaximum kann eine Amplitude von 56 aufweisen und ein größtes Nebenmaximum $98_2$ einen Wert von 51, woraus sich ein Abstand (Distanz) von 5 ergibt. Es zeigt sich, dass im Fall der Fig. 8b eine Unterscheidung anhand der Kreuzkorrelationsfunktion fehleranfälliger sein kann als im Fall der Fig. 8a. Es kann demzufolge vorkommen, dass die Maxima, KKFMAX, nicht mehr deutlich ausgeprägt sind, da die KKF-Nebenmaxima nun dominant sind, was dazu führen kann, dass der Abstand, DIST, ebenfalls zu gering wird. Basierend auf veränderlichen Schwellwerten 102 können insofern korrekte oder fehlerhafte Ergebnisse geliefert werden, ob eine Kreuzkorrelationsfunktion genügend hohe Maxima aufweist.

In anderen Worten ist in Fig. 8a ein Beispiel für eine Ausprägung für den Empfang von gestörten Funksignalen gezeigt. Die mangelnde A-Priori-Kenntnis der Höhe des Pegels des Empfangssignals erschwert die Voreinstellung der Korrelationsschwelle 102, auch bezeichnet als Korrel_Thresh-Schwelle für den Korrelator. Die eingestellte Schwelle 102 ist adaptiv, d. h., an das spontan auftretende Funksignal angepasst. Erst damit ist die Entscheidung zur Erkennung der Korrelationsfolge präzise möglich, nämlich wenn die KKF in Ausprägung des Hauptmaximums (in Anlehnung an die Eigenschaften an die zu benutzenden Korrelationsfolgen, siehe oben) die Korrelationsschwelle überschreitet. Liegt diese Schwelle zu niedrig, sind ständig Fehlauslösungen zu erwarten, die für einen Funk-Transceiver zu unerwünschten Aufwachereignissen oder Alarmsignalen, sogenannten False Wake-Ups oder False-Alarms, führen können, siehe auch Fig. 8b. Liegt die Schwelle zu hoch, werden empfangene Funksignale nicht erkannt, was auch als Missed Wake-Ups bezeichnet werden kann, obwohl eine Erkennung möglich wäre. Eine Aussendung von zusätzlich auszusenden Trainingssequenzen zum Anlernen bzw. Einstellen der Korrelationsschwellen 102 entfällt hierbei. Dies verhindert zusätzliche Verzögerung, sowie zusätzlichen Sendeaufwand und zusätzliche Belegung des Funkkanals. Gerade bei dynamischen Störsignalen ist beim Auftreten sowie beim Wegfall der Störsignale ein erneutes Trainieren erforderlich, andernfalls kommt es zum Ausbleiben der Erkennung der gesendeten Korrelationsfolgen, also zum Datenverlust oder zum Verlust der Funkverbindung.

Die im Zusammenhang mit Ausführungsbeispielen beschriebene Methode, die sowohl als Verfahren als auch als Transceiver umgesetzt werden kann, umfasst eine Schätzung der Korrelator-Schwelle aufgrund der statistischen Auswertung eines Teils der zu empfangenden Korrelationsfolge der Länge N, um ein Vorabergebnis zu erhalten. Die Länge für die statistische Erfassung beträgt in Ausführungsbeispielen M Abtastpunkte anstatt N Abtastpunkte, was die zwar nicht ausgeschlossene aber einige erfindungsgemäßen Vorteile vermeidende vollständige Erfassung der Amplitudenwerte für die Länge N bedeuten würde.

Gemäß Ausführungsbeispielen wird M zu ½ N gewählt, beispielhaft seien N = 32 und M = 16, wobei beliebige andere Werte implementierbar sind. Der Schwellwertanpasser im Zusammenhang mit Ausführungsbeispielen ist ausgebildet, um eine Teilmenge der Abtastwerte auf das Vorliegen einer Wertedifferenz zu überprüfen, wobei das Vorabergebnis basierend darauf erhalten wird, ob die Wertedifferenz in der Teilmenge vorliegt. Dadurch, dass lediglich eine Teilmenge auf das Vorliegen der Wertedifferenz analysiert wird, ergibt sich der erfindungsgemäße Vorteil bereits dann, wenn M < N ist. Werte für N sind prinzipiell beliebig, der Wert von 32 ist lediglich exemplarisch gewählt und bietet Vorteile im Zusammenhang mit der Verwendung der hierin erörterten Gold-Codes.

Es ist möglich, aber nicht notwendig, dass der Anteil M als fester Faktor von N gewählt wird, etwa 1/4, 1/3, 1/2 oder dergleichen. Es ist ebenfalls nicht erforderlich, dass der Wert für M ein fixer oder konstanter Wert ist. Vielmehr sehen Ausführungsbeispiele vor, die Anzahl der Abtastwerte während der Auswertung schrittweise zu erhöhen, um das Auswerteergebnis bzw. das Vorabergebnis zu verfeinern.

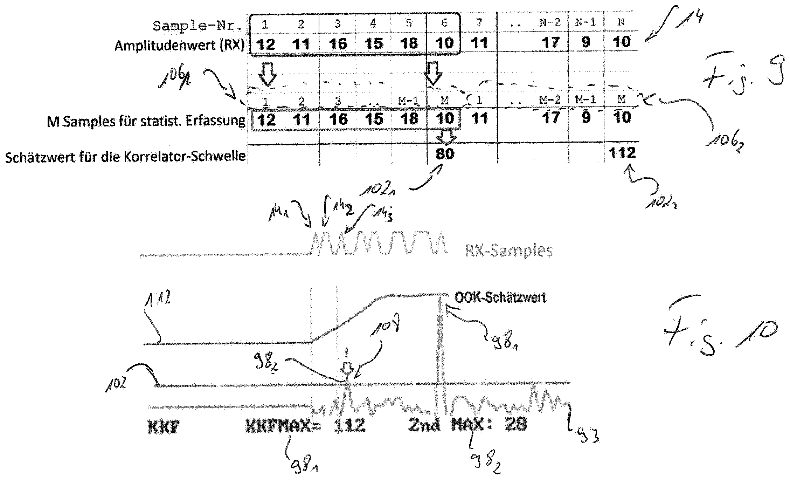

Wird M ≤ ½ N gewählt, so können mindestens 2 Schätzwerte für die Korrelationsschwelle 102 bzw. Korrel_Thresh_est bezogen auf die Sendedauer für eine Korrelationsfolge der Länge N ermittelt werden. Fig. 9 verdeutlicht, dass eine M-aus-N-Unterauswahl jeweils zu einem neuen Schätzwert für den Korrelator-Schwellwe führen kann, dass also unterschiedliche Unterauswahlen zu unterschiedlichen Ergebnissen führen können, für die ersten M Samples der Teilmenge $106_1$ kann bspw. aber ohne Einschränkung der Erfindung der Wert 80 erhalten werden, für die nächsten M Samples der Teilmenge $106_2$ dann bspw. 112. Fig. 9 zeigt nicht die Berechnung der Schwelle, basiert aber bspw. auf einem exemplarischen geschätzten OOK-Hub von mit 4..6. Für einen Wert ER = 0 könnte dann 16*4..5 = 64..80 als Schätzwert erhalten werden, für einen Wert ER = 3 wären dann 13*4..5 = 52..65 als Schätzwert denkbar. Der dargestellte Wert von 112 der Korrelator-Schwelle $102_2$ ergibt sich lediglich der Anschaulichkeit halber aus 16*7, wobei dieses Ausführungen nur Beispielwerte zur Veranschaulichung liefern.

In Fig. 9 ist eine schematische Tabelle dargestellt, in welcher für eine durchlaufende Indexierung von 1, ..., N die Abtastwerte 14 als Amplitudenwert des Empfangssignals (RX) dargestellt sind. Es ist ferner dargestellt, dass die Indexierung N der Amplitudenwerte 14 mit M = ½ N dazu führen kann, dass 2 Teilmengen $106_1$ und $106_2$ der Abtastwerte mit jeweils M Abtastwerten für eine Schätzung der Korrelatorschwelle genutzt werden.

In anderen Worten zeigt Fig. 9 eine zeitliche Abfolge von N Abtastwerten als Amplitudenwert (Samples) und einer Unterauswahl von M Samples. Es ist anzumerken, dass niedrige Signalpegel zur OOK-Kennzeichnung von "0"-Symbolen ("ZEROS") meist Rayleigh-verteilt sind und hohe Signalpegel zur OOK-Kennzeichnung von "1"-Symbolen ("ONES") meist gauß-verteilt sind. Eine Kenntnis des Zeros-Pegels und des Ones-Pegels ist in der Regel a priori dem Funkempfänger nicht bekannt.

Beginnt nun die Aussendung des gewünschten Korrelationssignals, findet im Empfänger ein Auftreten von deutlich höher anliegenden Ones-Samples statt. Der Empfang der ersten Bits der ausgesendeten Korrelationsfolge ist zunächst vom Empfang eines spontanen Störers nicht zu unterscheiden. Diese Erkenntnis wird erfindungsgemäß dadurch genutzt, eine Überprüfung dieses Sequenzbeginns als Vorabergebnis auszuwerten, um zu entscheiden, ob diese Samples unberücksichtigt bleiben sollen oder können, etwa im Falle der Entscheidung, dass es sich um einen Störer handelt, oder um alternativ, die Werte zu berücksichtigen, wenn erkannt wird, dass es sich um ein Nutzsignal handelt.

Das in Fig. 10 erkennbare und zu lösende Problem ist, dass die zeitlich ersten Ones-Samples, beispielhaft dargestellt als Abtastwerte 14, bis $14_3$ in Fig. 10, so große Amplituden aufweisen, dass die KKF inklusive Nebenmaxima mit den hohen Zahlenwerten der Ones-Samples laufend skaliert werden. Damit erhöhen sich das Hauptmaximum und auch die Nebenmaxima signifikant oberhalb einer veralteten Korrelator-Schwelle 102. Vorzeitige Fehlauslösungen wären die Folge, wie sie beispielsweise durch ein Ereignis 108 ausgelöst werden können, da zwar das gewünschte Maximum $98_1$ ebenfalls oberhalb der Schwelle 102 liegt, das Nebenmaxima zum Ereignis 108 aber bereits eine Fehlauslösung bewirkt.

Für den OOK-Schätzer, den Schwellwertanpasser, ist beispielsweise für eine 32 Bitfolge ein Summierer für 8 RX-Maxima und 8 RX-Minima angenommen, womit der geschätzte OOK-Endwert nach 16 Samples erreicht wird. Dies wird im Weiteren ausführlich erläutert. In Fig. 10 sind Transienten des Empfangspegels (RX-Samples) und der Kreuzkorrelationsfunktion mit langsam angepasstem OOK-Schätzwert 112 gezeigt. Für den OOK-Schätzer ist ein Summierer für 8 RX-Maxima und 8 RX-Minima angenommen. Der OOK-Endwert wird erst nach 16 Samples erreicht.

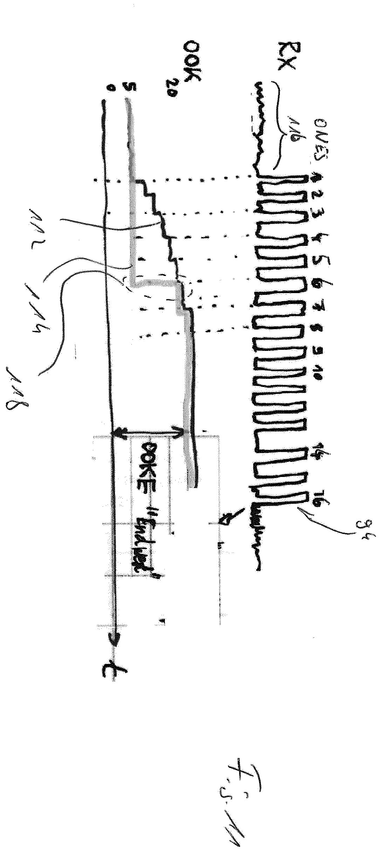

Ein Konzept, welches den OOK-Hub stätig schätzt und im Zeitverlauf allmählich den (tatsächlichen) Wert als Endwert erreicht, wie es im Zusammenhang mit der Fig. 11 beschrieben ist, wo die OOK-Kurve einen treppenförmigen Anstieg aufweist, führt zu Entscheidungsfehlern bei der Korrelation. Bis der Endwert des OOK-Berechnungswerts erreicht wird, sind jedoch, bei Nutzung von Korrelationslängen von 31bit oder 32 bit, für die Berechnung etwa 6 bis 8 Maxima erforderlich. Das heißt, in der Zwischenzeit würde der laufende OOK-Schätzwert sukzessive steigen, wie es in Fig. 10 für den ansteigenden Bereich der Kurve 112 dargestellt ist. Dies ist jedoch aufgrund des Auftretens von KKF-Nebenmaxima, siehe Ereignis 108 in Fig. 10, für die Schwellwertberechnung ungünstig. Daher wird die Berechnung für den (fast) finalen OOK-Wert im erfindungsgemäßen Lösungsansatz erst nach Auswertung einer Anzahl genügend hoher Maxima durchgeführt, beispielsweise einer Anzahl von zumindest 2, zumindest 3, zumindest 4, zumindest 5, zumindest 6, zumindest 7 oder zumindest 8.

In Fig. 11 ist für den Verlauf 94 von Abtastwerten eine Kurve 114 gezeigt, die mit einem erfindungsgemäßen Schwellwertanpasser erreicht werden kann. Die Abtastwerte weisen beispielhaft einen anfänglichen Rauschzustand 116 auf, der auch als rauschbasierte Nullen (noisy zeros) bezeichnet werden kann. Bevor die vordefinierte Anzahl von genügend hohen, also einen Mindestamplitudenwert aufweisenden Maxima-Werten erhalten ist, wird die OOK-Berechnung ausgesetzt bzw. ein Ersatzwert angenommen, an welchem noch keine Korrelation ausgelöst wird bzw. der Schwellwert entsprechend hoch angesetzt wird. Als Mindestamplitudenwert kann ein Absolutwert verwendet werden aber auch ein Relativwert, der sich bspw. als vordefinierte absolute oder relative Wertedifferenz zu einem Referenzwert beschreiben lässt.

Als Pseudocode kann dies so dargestellt werden, dass dann zunächst gilt:

$$OOKHUB := OOKHUBSTARTWERT$$

Als Parameter OOKHUB kann die Wertedifferenz bezeichnet werden, die mit einem vorzugsweise großem Startwert OOKHUBSTARTWERT initialisiert wird.

Das erfindungsgemäße Konzept ermöglicht es, dass beim Erreichen dieser genügend hohen Anzahl von Maxima ein sprunghafter Anstieg 118 der Kurve 114 erhalten wird, was vorteilhaft ist. Durch das Ausblenden oder Unberücksichtigt-Sein-Lassen, bis die Anzahl der genügend hohen Maxima erreicht ist, wird ein sogenanntes Blanking oder Masking für diese Werte ausgeführt. Das bedeutet, selbst wenn die ersten Maxima zwar genügend groß sind, aber noch keine korrespondierende Anzahl hiervon erhalten wurde, werden sie (noch) nicht berücksichtigt. Dies wird im Nachfolgenden weiter erläutert. Mit OOKE "Endwert" ist der OOK-Endwert bezeichnet. Der OOK-Signalhub, siehe Fig. 6, wird bspw. fortlaufend geschätzt. Je mehr Abtastwerte zur gewünschten ausgesendeten Korrelationsfolge vorliegen, desto genauer ist diese Schätzung, d. h. umso mehr nähert sich die sukzessive Schätzung dem tatsächlichen OOK-Endwert an.

In anderen Worten zeigt Fig. 11 Transienten des OOK-RX-Signals als Verlauf 94, des OOK-Schätzwerts, wie er mit bekannten Mitteln ermittelt wird, Kurve 112, sowie des nach der hierin vorgestellten Herangehensweise ermittelten OOK-Schätzwerts 114.

Da eine fehlertolerante Decodierung möglich sein soll, könnten immer noch korrigierbar innerhalb der beispielhaft 32 Samples der Korrelationsfolge von den im Falle einer angenommenen Gleichverteilung 16 "1"-Werten (ONES) bis zu 4 ONES fehlen, etwa durch dynamisches Shadowing oder Multi-Path-Fading. Eine größere Anzahl von Fehlern kann in dem Konzept unberücksichtigt bleiben, wenn davon ausgegangen wird, dass die Folge nicht mehr korrigierbar ist und deswegen als Störsignal betrachtet werden kann.

Innerhalb der beispielsweise zu M = ½ N angenommenen 16 Samples wären dann von den 8 erwarteten ONES nur 6 ONES (4 Fehler multipliziert mit dem gleichen Faktor ½) zu erwarten oder fordern. Innerhalb dieses Ausführungsbeispiels ist es daher möglich und vorteilhaft, die größten 6 Maxima-Werte (TOP6) heranzuziehen. Eine geringere Anzahl ist zur Beschleunigung des Verfahrens möglich, könnte aber zu einer höheren Fehleranfälligkeit führen. Die Ausblendung der OOK-Schätzung kann mit einer sogenannten Maskierung der Werte verglichen werden.

Die Maskierung oder Maskierungsbedingung, MB, kann beispielhaft formuliert werden basierend auf: Der Vergleichswert VW kann definiert werden zu

$$VW = MIN8 + MINOOKHUBSENSE$$

Dabei bezeichnet MIN8 bspw. den größten einer vordefinierten Anzahl von Minimalwerten der Abtastwerte, wobei auch ein anderer Referenzwert verwendet werden kann. MINOOKHUBSENSE bezeichnet einen zusätzlichen Mindesthub, der zur Initialisierung verwendet werden kann.

Für die Bestimmung des Korrelatorschwellwerts werden zunächst eine beispielhafte Anzahl von 8 MAXIMA und die 8 MINIMA aus den 16 eingelesenen Samples ermittelt. Dabei sind die Anzahl von 16 Samples beispielhaft gewählt, ebenso ist es möglich, den Faktor M = ½ N oder eine andere Regel zum Bestimmen der Anzahl von zu betrachteten Samples zu verwenden, so dass unabhängig von der Korrelationslänge 31 oder 32 bit auch eine andere Anzahl als 16 verwendet werden kann. Die Aufteilung dieser Teilmenge von 16 bit in 8 Maxima und 8 Minima ist ebenfalls beispielhaft. Aufgrund einer angenommenen Gleichverteilung im Signal kann sich ein Faktor von Teilmenge hälftig in Minima-Werte und hälftig in Maxima-Werte anbieten, es kann aber auch davon abgewichen werden.

Es steht der Implementierung frei, ob für jedes Sample die MINIMA und MAXIMA neu ermittelt werden und die MB-Bedingung neu geprüft wird.

MIN8 ist das 8-höchste Minimum, also das "TOP-MIN" (Ceiling).

MINOOKHUBSENSE ist ein Mindest_OOK_Sensitivity-Wert, etwa aus dem Seriellen Peripherie-Interface (SPI) Register, das üblicherweise zur Laufzeit statisch ist aber Änderungen durch den User zulässt.

Die Bedingung MB kann definiert werden als

WENN

MAX1 >= VW und MAX2 >= VW und MAX3 >= VW und MAX4 >= VW und
MAX5 >= VW und MAX6 >= VW,

DANN

wird das BLANKING von MAX1..6 aufgehoben.

Hier werden also aus der Teilmenge der Abtastwerte eine Unterteilmenge von 6 Maxima-Werten ausgewählt, wobei auch weniger oder mehr Werte ausgewertet werden könnten.

Durch die Auswertung von beispielsweise 6 Maximalwerten bezüglich der Wertedifferenz wird somit sichergestellt, dass nicht rein zufällig ein spontaner unerwünschter Störer ausgewählt wird und ein Ereignis auslöst, sondern dass die Teilauswertung bereits ein Ergebnis liefert, das dann erhalten wird und somit angibt, dass eine gewünschte Korrelationsfolge ausgewertet wird. Ein spontaner Störer würde beispielsweise lediglich zwei Maximalwerte liefern, aber der Gleichverteilung womöglich nicht entsprechen, so dass über die Gesamtbedingung dann der transiente Störer unberücksichtigt bliebe.

Mit obiger Herangehensweise wird OOK umfassender ermittelt und neu berechnet, weil SUM(MAXIMA) nun einen anderen Wert hat (eben 8 Einträge), was zu dem sprunghaften Anstieg in Fig. 11 führt. Das KKF-Maximum CCF_PEAK ergibt sich bei E Bitfehlern (E = 0..6 ) zu

$$CCF\_PEAK = (16 - E) * HI - (16 - E) * LO = 16 * OOK - E * OOK = (16 - E) * OOK.$$

wobei HI den ONE-Pegel, LO den ZERO-Pegel angibt und E die Anzahl der Übertragungsfehler nennt.

Bei einer beispielhaft zugelassenen Zahl von 4 Bitfehlern innerhalb der empfangenen Korrelationsfolge wird das KKF-Maximum bei 12 * OOK erwartet. Damit kann die Korrelatorschwelle auf einen geringeren aber dennoch hohen Wert gesetzt werden, um den Korrelator unempfindlich einzustellen, bspw. ausgedrückt durch den Pseudocode:

$$CORREL\_THRESH := 11 * OOK$$

Gründe dafür:

Möglichkeit fehlender ONES, etwa durch dynamisches Shadowing, Multi-Path-Fading (Mehrwegeschwund).

Möglichkeit fehlender ZEROs, etwa durch dynamische Kurzzeit-Störpulse (anderer Funksysteme).

Ausführungsbeispiele zur Implementierung des Konzepts zur Ermittlung der Korrelationsschwelle

Ausführungsbeispiele werden nun anhand einer exemplarischen Ausgestaltung und Pseudo-Code erörtert.

20 Samples werden als Teilmenge gewählt, jedes Sample wird für eine neue Ermittlung herangezogen, eine andere Unterauswahl, etwa jedes 4. Sample wäre auch möglich.

Auswählen von

8 MAXIMA, 8 MINIMA aus den 20 Samples. Dabei wird bevorzugt kein MINPP einbezogen. Als MINPP kann verstanden werden, dass keine Statistik (PP) innerhalb der ZEROs erforderlich ist. Es kann ausreichend sein nur 8 Minima (MIN) aus 20 Samples bestimmen.

MASKING: 6 aus 8 MAXIMA.

Dieses Masking kann vermittels Software umgesetzt werden wird aber bevorzugt hart-codiert, also anhand von Schaltungsstrukturen eines angepassten Schaltkreises implementiert.

Eine OOK-Bestimmung aus AVG(MAXIMA) - AVG(MINIMA) erfolgt bspw. erst nach Freigabe/Wegfall des Masking oder Blanking, also:

$$OOKHUB := [ SUMME(8 \ MAXIMA) - SUMME(8 \ MINIMA)] \ DIV \ 8$$

$$CORREL\_THRESH := (16 - MAXERR) * OOKHUB$$

Der Vergleichswert "VW" für das MASKING kann beispielhaft gesetzt werden zu

$$VW := MIN8 + MINOOKHUBSENSE$$

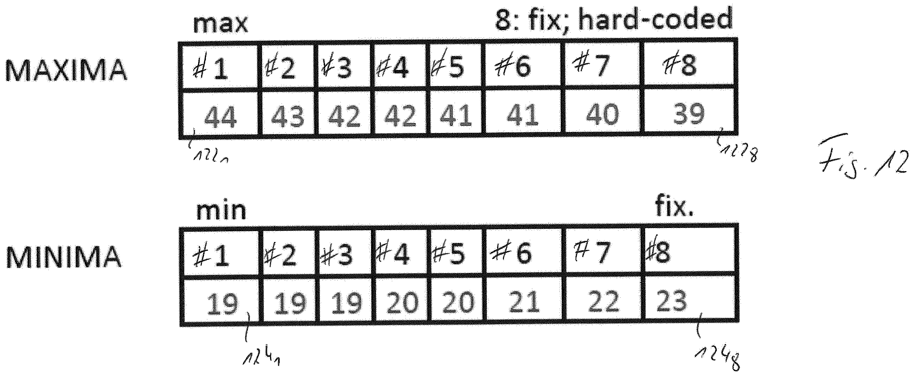

MIN8 ist das höchste Minimum (z.B. Amplitudenwert 23), MIN1 ist das kleinste Minimum (z.B. Amplitudenwert 19) innerhalb der eingelesenen 20 Samples, siehe Fig. 12.

Das OOK-BLANKING ist IN-AKTIV,

WENN

MAX1 >= VW und MAX2 >= VW und MAX3 >= VW und MAX4 >= VW und
MAX5 >= VW und MAX6 >= VW,

DANN

wird das BLANKING von MAX1..6 aufgehoben.

In Fig. 12 sind beispielhaft 8 aus den Abtastwerten bzw. der gewählten Teilmenge M extrahierte Maxima-Werte $122_1$ bis $122_8$ dargestellt. Die Anzahl von 8 Werten kann beispielsweise hartcodiert sein, etwa durch Verwendung entsprechend ausgestalteter Schaltkreise. Ebenfalls ist in Fig. 12 die Menge von 8 Minima-Werten 124, bis $124_8$ dargestellt, wobei die Maxima-Werte und die Minima-Werte jeweils fortlaufend mit Nummern 1 bis 8 nummeriert sind.

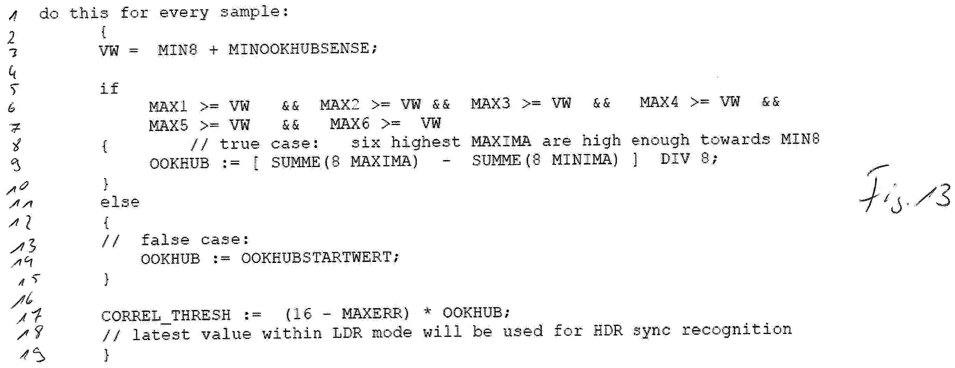

Zur besseren Veranschaulichung wird ein beispielhafter, aber nicht einschränkender Pseudocode in Fig. 13 dargestellt. Als Randbedingung wird hierzu angenommen, dass eine maximale Fehleranzahl in der Korrelationsfolge 5 beträgt und der Wert OOKHUB mit der Variable OOK initialisiert wird. Der OOK-Hub ist beispielhaft mit dem Bezugszeichen 84 in Fig. 6 gekennzeichnet. Es wird ferner ein Vergleichswert VW definiert, der auf dem größten Minimum (MIN8) und einer benutzerimplementierten bzw. auf Erfahrungswerten aufbauenden Minimalbeabstandung MINOOKHUBSENSE basiert. In den Zeilen 5 bis 8 wird überprüft, ob die Maxima-Werte MAX1 bis MAX6 jeweils größer oder gleich sind als der Vergleichswert. Dann, siehe Zeile 9 des Codes, wird ein Mittelwert aus dem jeweiligen Abstand der Maxima-Werte und der Minima-Werte gebildet. Ist dies nicht der Fall, Zeilen 13 bis 15 des Codes, verbleibt der Wert OOKHUB beim OOKHUBSTARTWERT.

Das Vorabergebnis im Zusammenhang mit hierin erörterten Ausführungsbeispielen kann dadurch erhalten werden, indem die Überprüfung ausgeführt wird, ob jeder der Werte MAX1 bis MAX6 größer oder gleich dem Vergleichswert ist. Ist dies der Fall (True Case), kann der Schwellwertanpasser ausgebildet sein, um den Schwellwert basierend auf einem Mittelwert einer Unterteilmenge der Abtastwerte zu bestimmen. Dieser Mittelwert der Unterteilmenge ist beispielsweise die Differenz zwischen der Summe aus acht MAXIMA und der Summe aus acht MINIMA, welche durch die jeweilige Anzahl geteilt wird. Die beispielhafte Division durch den Wert 8 ist schaltungstechnisch mit geringem oder gar geringstem Aufwand umsetzbar und damit besonders implementierungsfreundlich.

Wie es aus der obigen Beschreibung und der Fig. 13 hervorgeht, sehen Ausführungsbeispiele vor, einen Funk-Transceiver bereitzustellen, bei dem der Schwellwertanpasser ausgebildet ist, um den Korrelator mit einem ersten Schwellwert einzustellen, bei dem der Korrelator mit einem geringen Umfang auf ein Störsignal anspricht, das an der Funkschnittstelle empfangen wird, wenn das Vorabergebnis nicht anzeigt, dass die Abtastwerte das Korrelationsfolgenmerkmal aufweisen, und um den Korrelator mit einem zweiten Schwellwert einzustellen, bei dem der Korrelator mit einem hohen Umfang auf ein Störsignal anspricht, wenn das Vorabergebnis anzeigt, dass die Abtastwerte das Korrelationsfolgenmerkmal aufweisen. Dies ist aber insofern tolerierbar, da aufgrund des Vorabergebnisses die Erwartung vorliegt, dass das empfangene Funksignal kein unerwünschter Störer ist, sondern ein auszuwertendes Funksignal. Während des Vorabergebnisses wird insofern davon ausgegangen, dass die aktuelle Auswertung für ein Nutzsignal ausgeführt wird. Ungeachtet dessen ist die Einstellung auch empfindlich für ein Störsignal gewählt.

Durch das Blanking und den stufenförmigen Bereich 118 in der Fig. 11 wird ebenso deutlich, dass der Korrelator ausgebildet ist, um die Korrelation mit einem veränderlichen und während der Korrelation durch den Schwellwertanpasser eingestellten Schwellwert auszuführen. Ausführungsbeispiele ermöglichen es, den Funk-Transceiver so auszugestalten, dass dieser ausgebildet ist, um den unempfindlichen Schwellwert basierend auf und insbesondere nahe an einem erwarteten Maximalwert des Korrelationsergebnisses einzustellen. Dadurch kann sichergestellt werden, dass es sehr unwahrscheinlich ist, dass der Korrelator mit seiner aktuellen Konfiguration auslöst. Erst wenn der Schwellwertanpasser unter Berücksichtigung des Vorabergebnisses die Aussage liefert, dass davon ausgegangen wird, dass ein Nutzsignal und kein unerwünschter Störer vorliegt, in dem die Maxima-Werte berücksichtigt wurden, wird der Korrelator sensitiver eingestellt, wobei das Risiko für Fehlauslösungen bereits vorab minimiert wurde.

Gemäß einem Ausführungsbeispiel ist das Korrelationsfolgenmerkmal eine Wertedifferenz zwischen Abtastwerten. Dies ist in Fig. 13 durch das Bilden des Vergleichswertes VW dargestellt, welcher auf dem größten Minimum aus der Unterteilmenge, MIN8, basiert. Die betrachteten Maximalwerte müssen zumindest die Wertedifferenz MINOOKHUBSENSE aufweisen, um die überprüfte Bedingung zu erfüllen. Erst wenn das Vorabergebnis anzeigt, dass die Wertedifferenz in der Teilmenge, den betrachteten Maximalwerten, vorliegt, wird eine entsprechende Anpassung vorgenommen.

Die Auswahl von 8 Minima und 8 Maxima kann als Auswertung der 16 (zeitlich ersten) Abtastwerte verstanden werden. Es wird für die Korrelation von mittelwertfreien Korrelationsfolgen ausgegangen, wobei in Ausführungsbeispielen auch hiervon abgewichen werden kann. Beim Vorliegen von mittelwertfreien Korrelationsfolgen kann erwartet werden, dass gleich viele Einsen wie Nullen empfangen werden. Die Anzahl von 16 Abtastwerten ist bei einer Korrelationsfolge von 32 Bit die Hälfte der Gesamtlänge der erwarteten Sequenz. Es kann deshalb davon ausgegangen werden, dass mit dem Einlesen von in etwa der Hälfte der Abtastwerte, also 16 von 32 Samples, die Schätzung für den Schwellwert sehr gut ist. Es sind aber ohne Probleme auch mehr Abtastwerte als 16 für eine Vorab-Bewertung denkbar. Je nach Implementierungskriterium kann hiervon abgewichen werden. Im Rahmen des hierin beschriebenen Beispiels ist es vorteilhaft, von den ermittelten 8 MINIMA bzw. 8 MAXIMA eine Unterauswahl der höchstens 6 MINIMA bzw. der niedrigsten 6 MINIMA zu benutzen, damit der Vorabschätzer zuverlässiger arbeitet und Abtastwerte mit geringerem Signalhub die Vorabschätzung nicht unnötig verschlechtern. Dies kann auch so formuliert werden, dass nur die deutlich ausgeprägteren Minima/Maxima für die Vorabschätzung genutzt werden. Auch hier kann die Fehlertoleranz berücksichtigt werden, indem bspw. analog zu den oben erörterten 6 Maxima-Werte für erwartete 8 ONES-Einträge bei den Minima ebenfalls eine Untermenge betrachtet wird. Es kann beispielhaft im Rahmen der angenommen Korrelationsfolgen und Fehlertoleranzen ebenfalls von 8 erwarteten ZEROs ausgegangen werden , die sich auf die niedrigsten 6 ZEROs beschränken, um auch hier 2 Fehler zu tolerieren. Dann wird der geschätzte Schwellwert näher am tatsächlichen Schwellwert liegen. Ausführungsbeispiele weisen den Freiheitsgrad auf, wie viele der 8 MINIMA bzw. MAXIMA-Werte für die Vorabschätzung benutzt werden. Ebenso ist die Anzahl von 8 Werten nicht festgelegt, sondern abhängig von der Gesamtlänge der Korrelationsfolge und der beabsichtigten Genauigkeit.

Das Korrelationsmaximum kann sich aus dem Wertehub (OOK) wie folgt ergeben:

$$CCF\_MAX = OOK * [(Sequenzlänge/2) - ER]$$

also hier

$$CCF\_MAX = OOK * (16 - ER).$$

unter Berücksichtigung der vertretbaren Fehler ER, was hierin auch als MAXERR bezeichnet ist. Bei einer angenommenen oder erwarteten "erlittenen" bzw. eintretenden Zahl an Empfangsfehlern (ER) ist dann das KKF_MAX bzw. CCF_MAX nach obiger Forme zu erwarten. MAXERR kann als eine Größe verstanden werden, die abhängig ist von der verwendeten Korrelationsfolge, bezüglich der max. Fehlertoleranz, wo die KKF noch ein ausgeprägtes Hauptmaximum aufweist.

In der Vorab-Phase ist es vorteilhaft, den OOK-Wert zu schätzen, etwa basierend auf den (6 von 8) Minima-Werten bzw. (6 von 8) Maxima-Werten. Sobald OOK vorliegt, kann CCF_MAX als Korrelationsschwelle entsprechend geschätzt werden. Hierzu ist es vorteilhaft, noch eine Marge vorzusehen, also beispielsweise den Wert auf höchstens 70%, höchstens 80% oder höchstens 90% vom theoretischen CCF_MAX-Wert als Schwellwert zu setzen.

Beispielhafter Lösungsansatz

Gemäß einem Ausführungsbeispiel wird sampleweise eingelesen. Im Weiteren werden die TOP6-Maxima (MAX1 bis MAX6) zunächst einmal ausgeblendet, es erfolgt das beschriebene Blanking. Erst wenn alle TOP6-Maxima die Bedingung erfüllen, dass

$$MAX1…MAX6 >= MIN8 + MINOOKHUBSENSE$$

wird das Blanking/Masking von MAX1...MAX6 aufgehoben, siehe Zeilen 5 bis 14 des Codes in Fig. 13. Dies ermöglicht, dass eine Prüfung dahingehend ausreichend ist, ob MAX6 >= MIN8 + MINOOKHUBSENSE.

Hierfür können wieder wie ursprünglich die 8 MAXIMA und die 8 MINIMA ermittelt werden, siehe hierzu Fig. 12.

Vorteilhaft ist, wenn als Initialisierungswert für den Schwellwert eine sehr hohe Korrelationsschwelle angesetzt wird. Gemäß einem Ausführungsbeispiel ist der Funk-Transceiver deshalb so ausgestaltet, dass der Korrelator mit einem ersten Schwellwert initialisiert wird, wobei der Schwellwertanpasser ausgebildet ist, um den Schwellwert auf einen zweiten und gegenüber dem ersten Schwellwert empfindlicheren Schwellwert anzupassen, wenn das Vorabergebnis anzeigt, dass die Abtastwerte das Korrelationsfolgenmerkmal aufweisen. Anders ausgedrückt, die Korrelationsschwelle wird erst dann nach unten korrigiert, wenn die Maxima genügend weit von den Minima entfernt sind, wie es beispielsweise durch den Code in Fig. 13 überprüft wird. Dies kann auch so interpretiert werden, dass zunächst überprüft wird, als Vorabergebnis, ob eine Art Mindesthub für die TOP6 der Maxima vorliegt. Ist die Korrelation (Code Match) dann gültig, wurde der Code erkannt, und es wird weiter verfahren mit derselben Korrelationsschwelle, wie es dadurch gezeigt ist, dass der Wert OOKHUB in Zeile 9 des Codes in Fig. 13 für die Korrelationsschwelle in Zeile 17 herangezogen wird. Wurde keine Code Match bzw. Übereinstimmung erkannt, dann wird alles wieder auf Anfang gesetzt, siehe Zeile 14 in Verbindung mit Zeile 17 des Codes. Gemäß einem Ausführungsbeispiel werden weitere Maxima und Minima weiterhin eingelesen, aber nicht gelöscht. Der Korrelationswert kann auf einen höheren Wert gesetzt werden. Gemäß einem Ausführungsbeispiel ist die Funkschnittstelle des Funk-Transceivers ausgebildet, um zeitlich aufeinanderfolgende zusätzliche Abtastwerte bereitzustellen. Der Schwellwertanpasser ist ausgebildet, um das Vorabergebnis wiederholt und unter Verwendung der zusätzlichen Abtastwerte zu erhalten. Die zusätzlichen Abtastwerte können bestehende Abtastwerte ergänzen oder überschreiben, etwa indem ältere Abtastwerte zunächst überschrieben werden. Gemäß einem Ausführungsbeispiel ist der Funk-Transceiver ausgebildet, um die Mehrzahl von Abtastwerten um zusätzliche Abtastwerte zu erweitern, also keine Löschung vorzunehmen.

Gemäß einem Ausführungsbeispiel ist der Schwellwertanpasser ausgebildet, um eine Unterteilmenge der betrachteten Samples zu bestimmen. Die Unterteilmenge sind beispielsweise die Maximalwerte 122 und/oder die Minimalwerte 124. Dies kann eine weitere Reduktion der beispielsweise 20 Abtastwerte aus den 32 erwarteten Werten der Korrelationsfolge mit einer Länge von 32 Bit umfassen. Die Unterteilmenge kann für das Einstellen des Schwellwerts zumindest teilweise unberücksichtigt bleiben, wenn das Vorabergebnis anzeigt, dass die Wertedifferenz in der Teilmenge nicht vorliegt, siehe Zeilen 13 und 14 des Codes in Fig. 13. Der Schwellwert kann unter Berücksichtigung der Unterteilmenge eingestellt werden, wenn das Vorabergebnis anzeigt, dass die Wertedifferenz in der Teilmenge vorliegt. Zu erwähnen ist an dieser Stelle, dass die beispielhafte Auswahl von 6 Maximalwerten exemplarisch ist und auch innerhalb der gewählten Teilmenge, etwa 8 Maximalwerte, siehe Fig. 12, einen beliebigen anderen Wert aufweisen kann.

Ein Schwellwertanpasser im Zusammenhang mit hierin erörterten Ausführungsbeispielen kann ausgebildet sein, um basierend auf einer ersten Gruppe von Minimalwerten der Unterteilmenge einen Referenzwert zu bestimmen, etwa den Wert MIN8. Alternativ könnte auch ein Mittelwert der Minimalwerte oder auch der geringste Wert der MINIMA herangezogen werden. Eine zweite Gruppe von Maximalwerten, etwa MAX1 bis MAX6, der Unterteilmenge kann genutzt werden, um zu überprüfen, ob die Abtastwerte der zweiten Gruppe zumindest die Wertedifferenz zu dem Referenzwert aufweisen.

Gemäß einem Ausführungsbeispiel werden die Gruppen der Maximalwerte und die Gruppen der Minimalwerte basierend auf oder entsprechend einer erwarteten Verteilung der Abtastwerte in der Unterteilmenge eingestellt. Wie es beschrieben ist, wird unter Berücksichtigung der Fehlertoleranz und unter beispielhafter Berücksichtigung der erwarteten Gleichverteilung bei der Auswahl der halben Korrelationsfolgenlänge ein Wert von 8 MAXIMA und 8 MINIMA erwartet, was unter zusätzlicher Berücksichtigung der Fehlertoleranz zu 6 erwarteten Maximalwerten führen kann. Anders gewählte Korrelationsfolgen oder Codeeigenschaften können es erlauben, von diesen Werten ohne Weiteres abzuweichen.

Allgemein betrachtet können die Gruppen der Maximalwerte und die Gruppen der Minimalwerte basierend auf der Regel

$$A = (MW - ER) \cdot X1$$

ausgewählt wird; und/oder

$$B = (MW - ER) \cdot X2$$

bei dem eine Anzahl der zweiten Gruppe basierend auf der Regel
wobei A die Anzahl der ersten Gruppe, B die Anzahl der zweiten Gruppe; MW die Abtrastrate; ER eine korrigierbare Anzahl von Bitfehlern in einer Bitfolge des Funksignals, X1 der Anteil der von Minimalwerten in der fehlerfreien Bitfolge und X2 der Anteil der von Maximalwerten in der fehlerfreien Bitfolge beschreibt.

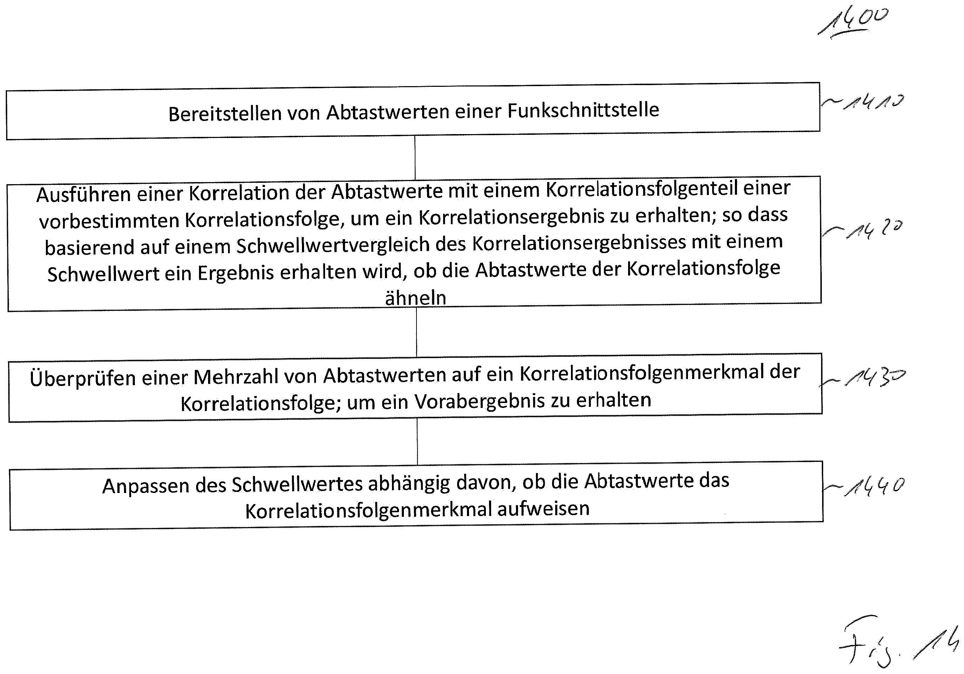

Fig. 14 zeigt ein schematisches Ablaufdiagramm eines Verfahrens 1400 gemäß einem Ausführungsbeispiel. Das Verfahren 1400 umfasst einen Schritt 1410 zum Bereitstellen von Abtastwerten einer Funkschnittstelle. Ein Schritt 1420 umfasst ein Ausführen einer Korrelation der Abtastwerte mit einem Korrelationsfolgenteil einer vorbestimmten Korrelationsfolge, um ein Korrelationsergebnis zu erhalten, so dass basierend auf einem Schwellwertvergleich des Korrelationsergebnisses mit einem Schwellwert ein Ergebnis erhalten wird, ob die Abtastwerte der Korrelationsfolge ähneln. Ein Schritt 1430 umfasst ein Überprüfen einer Mehrzahl von Abtastwerten auf ein Korrelationsfolgenmerkmal der Korrelationsfolge, um ein Vorabergebnis zu erhalten. Ein Schritt 1440 umfasst ein Anpassen des Schwellwertes abhängig davon, ob die Abtastwerte das Korrelationsfolgenmerkmal aufweisen.

Ausführungsbeispiele beschreiben somit eine Vorrichtung und ein Verfahren zum stromsparenden Empfang von Funksignalen, etwa durch einen Superregenerativempfänger mit anschließender Mustererkennung mit einem Korrelator. Die Funknachricht kann aus speziellen Korrelationsfolgen bestehen, die Nutzdaten übermitteln. Das Trainieren des Funkempfängers, insbesondere einer AGC oder eines Korrelators zum Anpassen an die jeweilige Funkkanalsituation, kann hierbei entfallen. Ausführungsbeispiele ermöglichen eine automatische Anpassung der Korrelationsschwelle ohne extra Trainingssequenzen, basierend auf einem abtastenden Funkempfänger für mehrwertige Pegelauswertung. Hierin beschriebene Konzepte ermöglichen eine Toleranz gegenüber dynamischen Störern und können nahezu latenzfrei ausgeführt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Funk-Transceiver mit:

   einer Funkschnittstelle (12; 12') zum Empfangen eines Funksignals (24) und zum Bereitstellen von Abtastwerten (14) basierend auf dem Funksignal (24);
   einem Korrelator (16), der zum Ausführen einer Korrelation der Abtastwerte (14) mit einem Korrelationsfolgenteil (18) einer vorbestimmten Korrelationsfolge ausgebildet ist, um ein Korrelationsergebnis (22) zu erhalten; wobei der Funk-Transceiver ausgebildet ist, um basierend auf einem Schwellwertvergleich des Korrelationsergebnisses (22) mit einem Schwellwert (102) ein Ergebnis zu liefern, ob die Abtastwerte (14) der Korrelationsfolge ähneln;
   einem Schwellwertanpasser (26) zum Anpassen des Schwellwertes (102); wobei der Schwellwertanpasser ausgebildet ist, um eine Mehrzahl von Abtastwerten (14) zu erhalten;
   wobei der Schwellwertanpasser (26) ausgebildet ist, um die Abtastwerte (14) auf ein Korrelationsfolgenmerkmal der Korrelationsfolge zu überprüfen; um ein Vorabergebnis (28) zu erhalten, und um den Schwellwert (102) abhängig davon anzupassen, ob die Abtastwerte das Korrelationsfolgenmerkmal aufweisen.

2. Funk-Transceiver gemäß Anspruch 1, bei dem der Schwellwertanpasser (26) ausgebildet ist, um den Korrelator (16) mit einem ersten Schwellwert (102) einzustellen, bei dem der Korrelator (16) mit einem geringen Umfang auf ein Störsignal anspricht, das an der Funkschnittstelle (12; 12') empfangen wird, wenn das Vorabergebnis (28) nicht anzeigt, dass die Abtastwerte das Korrelationsfolgenmerkmal aufweisen; und um den Korrelator (16) mit einem zweiten Schwellwert (102) einzustellen, bei dem der Korrelator (16) mit einem hohen Umfang auf das Störsignal anspricht, wenn das Vorabergebnis (28) anzeigt, dass die Abtastwerte (14) das Korrelationsfolgenmerkmal aufweisen.

3. Funk-Transceiver gemäß Anspruch 1 oder 2, bei dem der Korrelator (16) ausgebildet ist, um die Korrelation mit einem veränderlichen und während der Korrelation durch den Schwellwertanpasser (26) eingestellten Schwellwert (102) auszuführen.

4. Funk-Transceiver gemäß Anspruch 2 oder 3, der ausgebildet ist, um den ersten Schwellwert (102) basierend auf und insbesondere nahe an einem erwarteten Maximalwert des Korrelationsergebnisses (22) einzustellen.

5. Funk-Transceiver gemäß einem der vorangehenden Ansprüche, bei dem das Korrelationsfolgenmerkmal eine Wertedifferenz (VW) zwischen Abtastwerten (14) umfasst; und bei dem der Schwellwertanpasser (26) ausgebildet ist, um eine Teilmenge der Abtastwerte (14) auf das Vorliegen der Wertedifferenz (VW) zu überprüfen, wobei das Vorabergebnis (28) basierend darauf erhalten wird, ob die Wertedifferenz (VW) in der Teilmenge vorliegt.

6. Funk-Transceiver gemäß Anspruch 5, bei dem der Schwellwertanpasser (26) ausgebildet ist, um eine Unterteilmenge der Teilmenge zu bestimmen und für das Einstellen des Schwellwerts (102) zumindest teilweise unberücksichtigt zu lassen, wenn das Vorabergebnis (28) anzeigt, dass die Wertedifferenz (VW) in der Teilmenge nicht vorliegt; und um den Schwellwert (102) unter Berücksichtigung der Unterteilmenge einzustellen, wenn das Vorabergebnis (28) anzeigt, dass die Wertedifferenz (VW) in der Teilmenge vorliegt.

7. Funk-Transceiver gemäß Anspruch 5 oder 6, bei dem der Schwellwertanpasser (26) ausgebildet ist, um basierend auf einer ersten Gruppe von Minimalwerten der Unterteilmenge einen Referenzwert zu bestimmen; und um basierend auf einer zweiten Gruppe von Maximalwerten der Unterteilmenge zu überprüfen, ob die Abtastwerte (14) der zweiten Gruppe zumindest die Wertedifferenz (VW) zu dem Referenzwert aufweisen.

8. Funk-Transceiver gemäß Anspruch 7, bei dem eine Anzahl der ersten Gruppe und eine Anzahl der zweiten Gruppe basierend auf einer erwarteten Verteilung der Abtastwerte (14) in der Unterteilmenge eingestellt ist.

9. Funk-Transceiver gemäß Anspruch 7 oder 8, bei dem eine Anzahl der ersten Gruppe basierend auf der Regel

$$A = (MW - ER) \cdot X1$$

ausgewählt wird; und/oder

$$B = (MW - ER) \cdot X2$$

bei dem eine Anzahl der zweiten Gruppe basierend auf der Regel

wobei A die Anzahl der ersten Gruppe, B die Anzahl der zweiten Gruppe; MW die Abtrastrate; ER eine korrigierbare Anzahl von Bitfehlern in einer Bitfolge des Funksignals (24), X1 der Anteil der von Minimalwerten in der fehlerfreien Bitfolge und X2 der Anteil der von Maximalwerten in der fehlerfreien Bitfolge beschreibt.

10. Funk-Transceiver gemäß einem der Ansprüche 5 bis 9, bei dem der Schwellwertanpasser (26) ausgebildet ist, um den Schwellwert (102) bei Vorliegen des Vorabergebnisses (28) basierend auf einem Mittelwert einer Unterteilmenge der Abtastwerte (14) zu bestimmen.

11. Funk-Transceiver gemäß einem der vorangehenden Ansprüche, bei dem die Funkschnittstelle (12; 12') ausgebildet ist, um zeitlich aufeinanderfolgende zusätzliche Abtastwerte (14) bereitzustellen; wobei der Schwellwertanpasser (26) ausgebildet ist, um das Vorabergebnis (28) wiederholt und unter Verwendung der zusätzlichen Abtastwerte zu erhalten..

12. Funk-Transceiver gemäß Anspruch 11, der ausgebildet ist, um die Mehrzahl von Abtastwerte (14) um die zusätzlichen Abtastwerte zu erweitern.

13. Funk-Transceiver gemäß einem der vorangehenden Ansprüche, der ausgebildet ist, um den Korrelator (16) mit einem ersten Schwellwert zu initialisieren; wobei der Schwellwertanpasser (26) ausgebildet ist, um den Schwellwert (102) auf einen zweiten und gegenüber dem ersten Schwellwert empfindlicheren Schwellwert anzupassen, wenn das Vorabergebnis (28) anzeigt, dass die Abtastwerte das Korrelationsfolgenmerkmal aufweisen.

14. Verfahren zum Betreiben eines Funk-Transceivers mit folgenden Schritten:

Bereitstellen (1410) von Abtastwerten einer Funkschnittstelle;
Ausführen (1420) einer Korrelation der Abtastwerte mit einem Korrelationsfolgenteil einer vorbestimmten Korrelationsfolge, um ein Korrelationsergebnis zu erhalten; so dass basierend auf einem Schwellwertvergleich des Korrelationsergebnisses mit einem Schwellwert ein Ergebnis erhalten wird, ob die Abtastwerte der Korrelationsfolge ähneln;
Überprüfen (1430) einer Mehrzahl von Abtastwerten auf ein Korrelationsfolgenmerkmal der Korrelationsfolge; um ein Vorabergebnis zu erhalten, und
Anpassen (1440) des Schwellwertes abhängig davon, ob die Abtastwerte das Korrelationsfolgenmerkmal aufweisen.

15. Speichermedium mit einem darauf gespeicherten Computerprogramm mit einem Programmcode zur Durchführung des Verfahrens nach Anspruch 14, wenn das Programm auf einem Computer läuft.

EP 4 539 365 A1

20

12'

34

42

44

| Funkempfänger-Frontend | AM-Signal | Wert-Diskretisierer | AMPL | Muster-erkenner |

36

38

14

26

22

Fig. 2

Fig. 3

Fig. 4a

ts,max = 15 ns

54

74a

74b

t

OS

Fig. 4b

ts,max = 10 ns

54

74a

74b

t

OS

Fig. 5

Fig. 6

Fig. 7b

Fig. 7a

Fig. 84

Fig. 85

| Sample-Nr. | 1 | 2 | 3 | 4 | 5 | 6 | 7 | .. | N-2 | N-1 | N |
|---|---|---|---|---|---|---|---|---|---|---|---|
| Amplitudenwert (RX) | 12 | 11 | 16 | 15 | 18 | 10 | 11 | | 17 | 9 | 10 |

| | 1 | 2 | 3 | ... | M-1 | M | 1 | .. | M-2 | M-1 | M |
|---|---|---|---|---|---|---|---|---|---|---|---|
| M Samples für statist. Erfassung | 12 | 11 | 16 | 15 | 18 | 10 | 11 | | 17 | 9 | 10 |
| Schätzwert für die Korrelator-Schwelle | | | | | | 80 | | | | | 112 |

RX-Samples

OOK-Schätzwert

KKF    KKFMAX= 112    2nd MAX: 28

*Fig. 9*

*Fig. 10*

Fig. 11

MAXIMA

| max | #1 | #2 | #3 | #4 | #5 | #6 | #7 | #8 |
|-----|----|----|----|----|----|----|----|----|
|     | 44 | 43 | 42 | 42 | 41 | 41 | 40 | 39 |

8: fix; hard-coded

MINIMA

| min | #1 | #2 | #3 | #4 | #5 | #6 | #7 | #8 |
|-----|----|----|----|----|----|----|----|----|
|     | 19 | 19 | 19 | 20 | 20 | 21 | 22 | 23 |

fix.

Fig. 12

```
do this for every sample:
        {
        VW =  MIN8 + MINOOKHUBSENSE;

        if
            MAX1 >= VW    &&   MAX2 >= VW &&   MAX3 >= VW   &&    MAX4 >= VW   &&
            MAX5 >= VW    &&    MAX6 >=   VW
        {       // true case:   six highest MAXIMA are high enough towards MIN8
            OOKHUB := [ SUMME(8 MAXIMA)  -  SUMME(8 MINIMA) ]  DIV 8;
        }
        else
        {
        //   false case:
            OOKHUB := OOKHUBSTARTWERT;
        }

        CORREL_THRESH :=  (16 - MAXERR) * OOKHUB;
        // latest value within LDR mode will be used for HDR sync recognition
        }
```

Fig.13

1400

Bereitstellen von Abtastwerten einer Funkschnittstelle ~ 1410

Ausführen einer Korrelation der Abtastwerte mit einem Korrelationsfolgenteil einer vorbestimmten Korrelationsfolge, um ein Korrelationsergebnis zu erhalten; so dass basierend auf einem Schwellwertvergleich des Korrelationsergebnisses mit einem Schwellwert ein Ergebnis erhalten wird, ob die Abtastwerte der Korrelationsfolge ähneln ~ 1420

Überprüfen einer Mehrzahl von Abtastwerten auf ein Korrelationsfolgenmerkmal der Korrelationsfolge; um ein Vorabergebnis zu erhalten ~ 1430

Anpassen des Schwellwertes abhängig davon, ob die Abtastwerte das Korrelationsfolgenmerkmal aufweisen ~ 1440

Fig. 14

**Europäisches Patentamt**
**European Patent Office**
**Office européen des brevets**

# EUROPÄISCHER RECHERCHENBERICHT

**Nummer der Anmeldung**

EP 23 20 3531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BRIGANT E ET AL: "ADAPTIVE THRESHOLD CONTROL SCHEME FOR PACKET ACQUISITION", IEEE TRANSACTIONS ON COMMUNICATIONS, IEEE SERVICE CENTER, PISCATAWAY, NJ. USA, Bd. 46, Nr. 12, 1. Dezember 1998 (1998-12-01), Seiten 1580-1582, XP000790916, ISSN: 0090-6778, DOI: 10.1109/26.737394 | 1-4, 11-15 | INV. H04L1/00 H04L25/06 |
| A | * das ganze Dokument * | 5-10 | |
| A | JP 2008 103845 A (MATSUSHITA ELECTRIC IND CO LTD) 1. Mai 2008 (2008-05-01) * das ganze Dokument * | 1-15 | |
| A | EP 2 695 307 B1 (FRAUNHOFER GES FORSCHUNG [DE]) 22. April 2015 (2015-04-22) * Absatz [0016] – Absatz [0059]; Abbildungen 2, 5 * | 1-15 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 12. März 2024 | Stolte, Norbert |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 20 3531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2024

| Im Recherchenbericht angeführtes Patentdokument | Datum der Veröffentlichung | Mitglied(er) der Patentfamilie | Datum der Veröffentlichung |
|---|---|---|---|
| JP 2008103845 A | 01-05-2008 | KEINE | |
| EP 2695307 B1 | 22-04-2015 | EP 2695307 A1 | 12-02-2014 |
| | | JP 5551847 B1 | 16-07-2014 |
| | | JP 2014517616 A | 17-07-2014 |
| | | US 2014093019 A1 | 03-04-2014 |
| | | WO 2013131963 A1 | 12-09-2013 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LÜKE, H. D.** Korrelationssignale. Springer, 1992
- **GOLD, R.** Optimal binary sequences for spread spectrum multiplexing (Corresp.). *Information Theory. In: IEEE Transactions on*, 1967, vol. 13 (4), 619-621
- Integrierter UHFFunkempfänger mit niedrigem Stromverbrauch und geringer Antwortzeit für die störsichere Datenübertragung. **MILOSIU, H.** Dissertation. N&H Verlag GbR, 2013